# EUROPEAN PATENT APPLICATION

(11) **EP 4 134 835 A1**
(43) Date of publication of application: **15.02.2023**
(21) Application number: 22172498.2
(22) Date of filing: 10.05.2022
(51) Int. Cl.: G06F 16/2455

(54) **INFORMATION PROCESSING METHOD, INFORMATION PROCESSING PROGRAM, AND DATASTREAM PROCESSING SYSTEM**

(30) Priority: 11.08.2021 JP 2021131449
(71) Applicant: FUJITSU LIMITED, Kawasaki-shi, Kanagawa 211-8588 (JP)
(72) Inventor: Zhang, Jiachao, Kawasaki-shi, Kanagawa, 211-8588 (JP); Itakura, Kota, Kawasaki-shi, Kanagawa, 211-8588 (JP); Yamaoka, Hisatoshi, Kawasaki-shi, Kanagawa, 211-8588 (JP); Okabayashi, Miwa, Kawasaki-shi, Kanagawa, 211-8588 (JP)
(74) Representative: Hoffmann Eitle

(57) **Abstract**

An information processing method by performing a computer, the information processing method includes accepting a query including first information for specifying a target period and a condition for extracting a processing result, selecting, based on the query, a processing unit that has a processing result updated in the target period from among a plurality of the processing units included in the stream processing infrastructure by referring to correspondence information representing, in association with each other, second information indicating each of the plurality of the processing units and third information indicating a timing of a last update of a processing result by the processing unit, and transmitting, to the selected processing unit, a request to execute a predetermined process on the processing result that has updated in the target period and satisfies the condition.

## Description

### [Field]

The embodiment discussed herein is related to an information processing method and an information processing program.

### [Background Art]

In the related art, there is a stream processing infrastructure including a plurality of processing units each of which processes data output from a data store by using a stream processing format. Each of the processing units stores a processing result based on the data therein or outputs the processing result to an external computer. A user of the stream processing infrastructure may have a request to cause each of the processing units to execute a predetermined process by limiting a processing target to a relatively new processing result or the like. The predetermined process is, for example, to output the relatively new processing result.

As the related art, for example, there is a technique of, when an end condition, which is generated from query data and is represented by a logical expression that is a combination of conditions of respective query elements decomposed from the query data, is satisfied, outputting an indication indicating that the condition is satisfied. For example, there is also a technique of receiving a server request, determining whether or not the number of entries in a context dictionary is greater than a threshold number of entries, rejecting the server request if the number of entries is greater than the threshold number of entries, and creating a request identifier corresponding to the server request from designated client context information if the number of entries is less than the threshold number of entries.

### [Citation List]

### [Patent Literature]

[PTL 1] Japanese Laid-open Patent Publication No. 2014-059744.
[PTL 2] U.S. Patent Application Publication No. 2014/0115045.

### [Summary]

### [Problem]

However, in the related art, an attempt to cause, in response to a request of a user, each of the processing units to execute the predetermined process by limiting the processing target in the stream processing infrastructure may lead to an increase in load on the stream processing infrastructure. For example, when a request to execute the predetermined process is transmitted to all the processing units, the request is transmitted also to a processing unit that does not have a processing result that serves as the processing target. This leads to an increase in load on the stream processing infrastructure.

In one aspect, an object of the present disclosure is to reduce the load on the stream processing infrastructure.

### [Solution to Problem]

According to an aspect of the embodiments, an information processing method by performing a computer, the information processing method includes: accepting a query including first information for specifying a target period and a condition for extracting a processing result; selecting, based on the query, a processing unit that has a processing result updated in the target period from among a plurality of the processing units included in the stream processing infrastructure by referring to correspondence information representing, in association with each other, second information indicating each of the plurality of the processing units and third information indicating a timing of a last update of a processing result by the processing unit; and transmitting, to the selected processing unit, a request to execute a predetermined process on the processing result that has updated in the target period and satisfies the condition.

### [Effects of Invention]

According to one aspect, the load on the stream processing infrastructure may be reduced.

### [Brief Description of Drawings]

FIG. 1 is an explanatory diagram illustrating an example of an information processing method according to an embodiment;
FIG. 2 is an explanatory diagram illustrating an example of a stream processing system;
FIG. 3 is an explanatory diagram illustrating an example of a service to which the stream processing system is applied;
FIG. 4 is a block diagram illustrating an example of a hardware structure of an information processing apparatus;
FIG. 5 is an explanatory diagram illustrating an example of stored content of a correspondence information management table;
FIG. 6 is a block diagram illustrating an example of a hardware structure of an accepting-side apparatus;
FIG. 7 is a block diagram illustrating an example of a hardware structure of an execution apparatus;
FIG. 8 is a block diagram illustrating an example of a functional structure of the stream processing system;
FIG. 9 is an explanatory diagram illustrating a flow of an operation of the stream processing system;
FIG. 10 is an explanatory diagram illustrating an example of processing-target data;
FIG. 11 is an explanatory diagram illustrating an example of an on-demand query;
FIG. 12 is an explanatory diagram (part 1) illustrating another example of a search condition;
FIG. 13 is an explanatory diagram (part 2) illustrating another example of the search condition;
FIG. 14 is an explanatory diagram (part 3) illustrating another example of the search condition;
FIG. 15 is an explanatory diagram (part 4) illustrating another example of the search condition;
FIG. 16 is an explanatory diagram (part 1) illustrating an example of an operation of the stream processing system;
FIG. 17 is an explanatory diagram (part 2) illustrating an example of the operation of the stream processing system;
FIG. 18 is an explanatory diagram (part 3) illustrating an example of the operation of the stream processing system;
FIG. 19 is an explanatory diagram (part 4) illustrating an example of the operation of the stream processing system;
FIG. 20 is an explanatory diagram (part 5) illustrating an example of the operation of the stream processing system;
FIG. 21 is a flowchart illustrating an example of a procedure of an accepting process;
FIG. 22 is a flowchart (part 1) illustrating an example of a procedure of a management process;
FIG. 23 is a flowchart (part 2) illustrating an example of the procedure of the management process;
FIG. 24 is a flowchart (part 3) illustrating an example of the procedure of the management process;
FIG. 25 is a flowchart (part 1) illustrating an example of a procedure of an execution process;
FIG. 26 is a flowchart (part 2) illustrating an example of the procedure of the execution process;
FIG. 27 is a flowchart illustrating an example of a procedure of a transition process; and
FIG. 28 is a flowchart illustrating an example of a procedure of a cancellation process.

### [Description of Embodiments]

An embodiment of an information processing method and an information processing program according to the present disclosure will be described in detail below with reference to the drawings.

### (Example of Information Processing Method According to Embodiment)

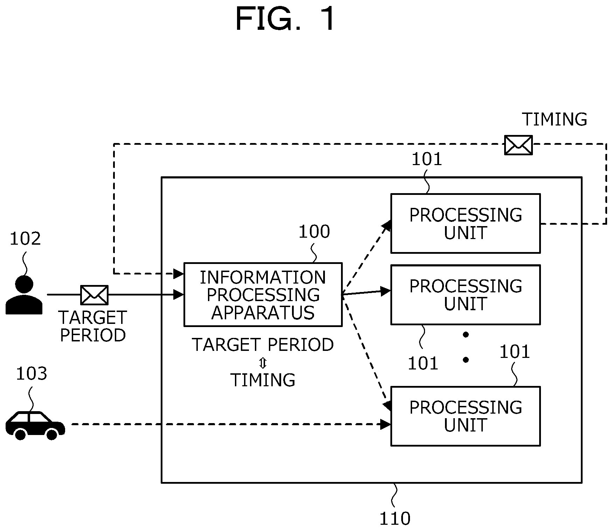

FIG. 1 is an explanatory diagram illustrating an example of an information processing method according to an embodiment. An information processing apparatus 100 is a computer included in a stream processing infrastructure.

The stream processing infrastructure includes a plurality of processing units each of which processes data output from a data store. The information processing apparatus 100 manages the processing units included in the stream processing infrastructure. Each of the processing units stores a processing result based on the data therein or outputs the processing result to an external computer. Each of the processing units stores the processing result based on the data, as a state, for example.

A user of the stream processing infrastructure may have a request to cause each of the processing units to execute a predetermined process by limiting a processing target to a relatively new processing result or the like. However, a filter function for extracting the processing target is not implemented in advance in the processing units included in the stream processing infrastructure of the related art. Thus, it is difficult for the processing units to execute the predetermined process by limiting the processing target in accordance with the request of the user.

It is also difficult for the processing units included in the stream processing infrastructure of the related art to execute the predetermined process at an arbitrary timing in accordance with the request of the user. For example, in a method called rule-based event aggregator (RBEA), it is difficult for the processing units to execute the predetermined process at a timing other than a timing at which data output from a data store arrives.

It is also difficult for the processing units included in the stream processing infrastructure of the related art to dynamically change a condition for extracting the processing target in accordance with the request of the user. For example, in a method called Flink SQL/Table API, the stream processing infrastructure is temporarily stopped, and a data flow in the stream processing infrastructure is rearranged. This leads to a decrease in convenience.

To cope with this, a method is conceivable in which an accepting unit is prepared in the stream processing infrastructure, the filter function for extracting the processing target is implemented in advance in the processing units, and the accepting unit transmits a request to execute the predetermined process to each of the processing units in accordance with the request of the user. For example, the accepting unit transmits, as data output from the data store, the request to execute the predetermined process to each of the processing units in accordance with a stream processing format.

This method has an issue in that the load on the stream processing infrastructure increases. For example, if the accepting unit transmits the request to execute the predetermined process to all the processing units, the request is transmitted also to a processing unit that does not have a processing result that serves as the processing target. This leads to an increase in load on the stream processing infrastructure.

For example, because of communication performed between the accepting unit and the processing unit that does not have the processing result that serves as the processing target, a communication load on the stream processing infrastructure increases. For example, because of the filter function executed in the processing unit that does not have the processing result that serves as the processing target, a processing load on the stream processing infrastructure increases.

Thus, it is desirable to reduce the load on the stream processing infrastructure after preparing the accepting unit in the stream processing infrastructure and implementing the filter function for extracting the processing target in advance in the processing units. Accordingly, in the present embodiment, an information processing method capable of reducing the load on the stream processing infrastructure will be described.

In FIG. 1, the information processing apparatus 100 is included in a stream processing infrastructure 110. The stream processing infrastructure 110 includes a plurality of processing units 101. Each of the processing units 101 receives data from a data store 103 and stores a processing result based on the received data. The data store 103 is, for example, an on-vehicle device. The data is sensing data. The processing result is, for example, a remaining travelable period or the like of a vehicle.

The information processing apparatus 100 stores correspondence information. For example, the correspondence information represents, in association with each other, information that indicates each of the processing units 101 and information that indicates a timing of a last update of a processing result of this processing unit 101 by this processing unit 101. The information that indicates the timing includes, for example, information that indicates a time point of the last update. The information that indicates the timing may include, for example, information that indicates that the processing result has not been updated for a certain period. For example, the information processing apparatus 100 receives the information that indicates the timing from the processing unit 101, and generates or updates the correspondence information.

(1-1) The information processing apparatus 100 accepts a query that includes information for identifying a target period and a condition for extracting a processing result. The target period is, for example, a period from the current time point to a time point that is before the current time point by a predetermined time. For example, there may be a case where the target period does not include the current time point. The information for identifying the target period may include, for example, information that indicates a length of a time from the current time point to a past time point such that a length of the target period from the current time point to the past time point is identifiable. The condition for extracting the processing result is, for example, a condition related to an attribute of the processing result. For example, the information processing apparatus 100 accepts the query by receiving the query from a user apparatus 102.

(1-2) With reference to the correspondence information, based on the accepted query, the information processing apparatus 100 selects the processing unit 101 that has the processing result updated in the target period from among the processing units 101 included in the stream processing infrastructure 110. For example, the information processing apparatus 100 selects the processing unit 101 for which the time point of the last update is included in the target period. In this manner, the information processing apparatus 100 may limit the processing unit 101 that serves as a transmission destination.

(1-3) The information processing apparatus 100 transmits, to the selected processing unit 101, a request to execute a predetermined process on the processing result that was updated in the target period and satisfies the condition. The predetermined process is, for example, to output the processing result that satisfies the condition. The predetermined process may be, for example, to generate a new processing result by using the processing result that satisfies the condition and output the new processing result. In this manner, the information processing apparatus 100 may transmit the request to the processing unit 101 that serves as the transmission destination by limiting the processing unit 101 that serves as the transmission destination. This thus may reduce a load on the stream processing infrastructure 110.

### (Example of Stream Processing System 200)

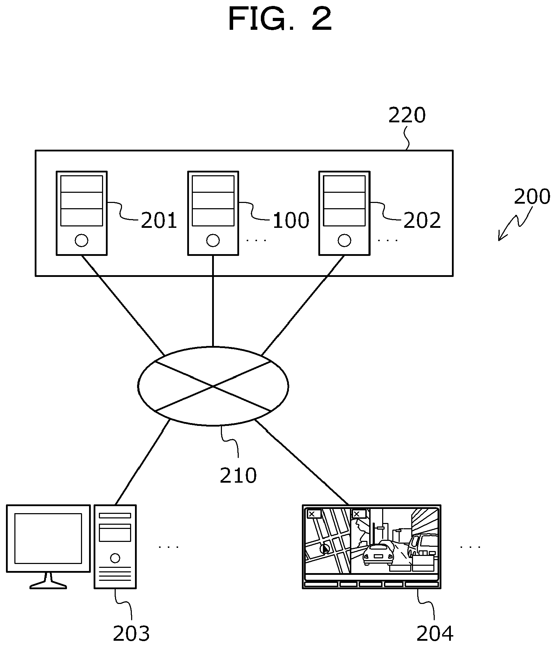

An example of a stream processing system 200 to which the information processing apparatus 100 illustrated in FIG. 1 is applied will be described next by using FIG. 2.

FIG. 2 is an explanatory diagram illustrating an example of the stream processing system 200. As illustrated in FIG. 2, the stream processing system 200 includes a stream processing infrastructure 220. The stream processing infrastructure 220 includes the plurality of information processing apparatuses 100, an accepting-side apparatus 201, and a plurality of execution apparatuses 202. The stream processing system 200 further includes a user apparatus 203 and a store apparatus 204.

In the stream processing system 200, the information processing apparatuses 100 and the accepting-side apparatus 201 are connected to each other via a network 210 that is wired or wireless. The network 210 is, for example, a local area network (LAN), a wide area network (WAN), Internet, or the like. The information processing apparatuses 100 and the execution apparatuses 202 are connected to each other via the network 210 that is wired or wireless. The accepting-side apparatus 201 and the user apparatus 203 are connected to each other via the network 210 that is wired or wireless. The execution apparatuses 202 and the store apparatus 204 are connected to each other via the network 210 that is wired or wireless.

The accepting-side apparatus 201 is a computer that receives an on-demand query from the user apparatus 203. The on-demand query includes information for identifying a target period and a condition for extracting a processing result. The on-demand query requests execution of a predetermined process on a processing result that was updated in the target period and satisfies the condition. The accepting-side apparatus 201 transmits the received on-demand query to each of the information processing apparatuses 100. The accepting-side apparatus 201 is, for example, a server, a personal computer (PC), or the like.

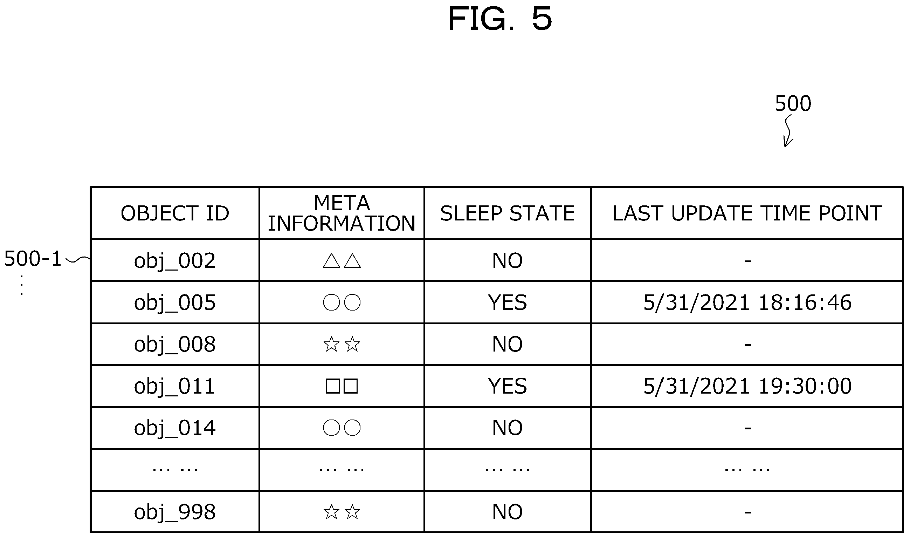

Each of the information processing apparatuses 100 is in charge of one or more objects. The objects are implemented by the execution apparatuses 202. The objects correspond to the processing units 101 illustrated in FIG. 1. Each of the information processing apparatuses 100 receives, from an object which the information processing apparatus 100 is in charge of, information that indicates a timing of a last update of a processing result of this object by this object. Based on the received information, the information processing apparatus 100 updates the correspondence information. The correspondence information is stored, for example, in a correspondence information management table 500 described later in FIG. 5.

The information processing apparatus 100 receives an on-demand query from the accepting-side apparatus 201. With reference to the correspondence information, based on the on-demand query, the information processing apparatus 100 selects an object to which the on-demand query is transferred from among the one or more objects which the information processing apparatus 100 is in charge of. For example, the information processing apparatus 100 selects an object having a processing result updated in the target period indicated by the on-demand query from among the one or more objects which the information processing apparatus 100 is in charge of. The information processing apparatus 100 transmits the on-demand query to the selected object. The information processing apparatus 100 is, for example, a server, a PC, or the like.

Each of the execution apparatuses 202 is a computer that implements one or more objects. Each of the execution apparatuses 202 receives, from the store apparatus 204, sensing data addressed to the object thereof. With the object, the execution apparatus 202 executes a process based on the sensing data. As a state of the object, the execution apparatus 202 stores or updates a processing result based on the sensing data. When the processing result of the object has not been updated for a certain period, the execution apparatus 202 generates information that indicates a timing of a last update of the processing result of the object by the object, and transmits the generated information to the information processing apparatus 100.

Each of the execution apparatus 202 receives, from the information processing apparatus 100, an on-demand query addressed to the object thereof. With the object, in response to the on-demand query, the execution apparatus 202 determines whether or not a processing result stored in the object satisfies a condition indicated by the on-demand query. With the object, the execution apparatus 202 executes a predetermined process corresponding to the on-demand query on the processing result that satisfies the condition. For example, the execution apparatus 202 outputs an execution result of the predetermined process. The execution apparatus 202 is, for example, a server, a PC, or the like.

The user apparatus 203 is a computer that generates an on-demand query based on an operation input by a user and transmits the on-demand query to the accepting-side apparatus 201. The user apparatus 203 is, for example, a PC, a tablet terminal, a smartphone, or the like. The store apparatus 204 is a computer that acquires sensing data. The store apparatus 204 transmits the sensing data to the execution apparatuses 202. The store apparatus 204 is, for example, a server, a PC, a tablet terminal, a smartphone, a wearable terminal, an on-vehicle device, a sensor device, or the like. In the example of FIG. 2, the store apparatus 204 is an on-vehicle device.

The case where the information processing apparatuses 100 are different from the accepting-side apparatus 201 has been described above. However, the configuration is not limited to this. For example, there may be a case where the information processing apparatuses 100 have the function of the accepting-side apparatus 201 and operate also as the accepting-side apparatus 201. The case where the information processing apparatuses 100 are different from the execution apparatuses 202 has been described above. However, the configuration is not limited to this. For example, there may be a case where the information processing apparatuses 100 have the function of the execution apparatuses 202 and operate also as the execution apparatuses 202.

### (Example of Service to which Stream Processing System 200 Is Applied)

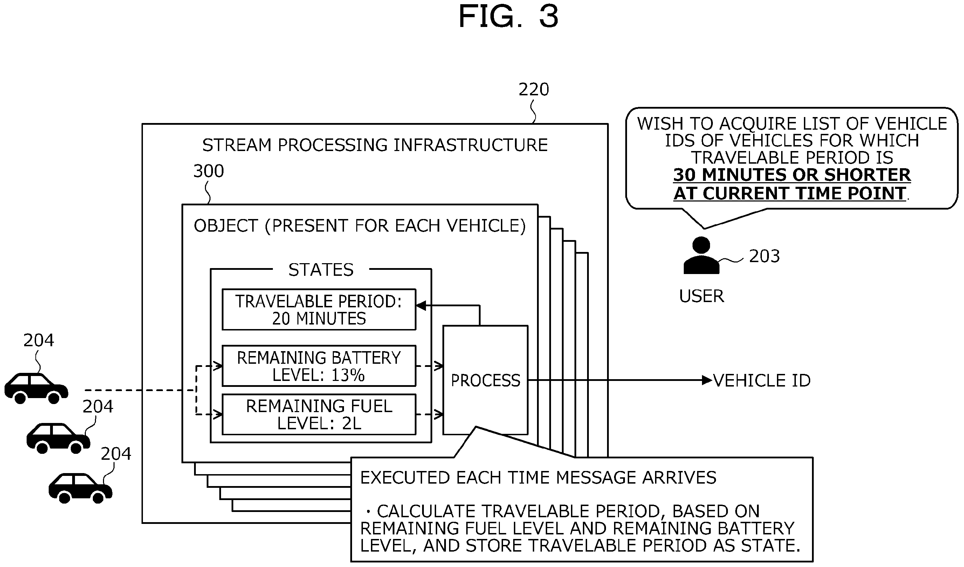

An example of a service to which the stream processing system 200 illustrated in FIG. 2 is applied will be described next by using FIG. 3.

FIG. 3 is an explanatory diagram illustrating an example of the service to which the stream processing system 200 is applied. In FIG. 3, a plurality of objects 300 are implemented in the stream processing infrastructure 220. Each of the objects 300 receives, as a message from the store apparatus 204, a remaining battery level and a remaining fuel level of a vehicle equipped with the store apparatus 204, and stores or updates the remaining battery level and the remaining fuel level as states. Each time the object 300 receives the message, the object 300 calculates a travelable period based on the message and stores the calculated travelable period as a state. When the travelable period is equal to or shorter than a threshold, the object 300 may output a vehicle ID for identifying the vehicle equipped with the store apparatus 204.

By using the accepting-side apparatus 201 and the information processing apparatuses 100, the stream processing system 200 implements a service for outputting a list of vehicle IDs for identifying vehicles whose travelable period at the current time point is equal to or shorter than a travelable period designated by the user so that the user is able to refer to the list. For example, in response to a request of the user, the stream processing system 200 may output a list of vehicle IDs for identifying vehicles whose travelable period at the current time point is equal to or shorter than 30 minutes so that the user is able to refer to the list.

### (Example of Hardware Structure of Information Processing Apparatus 100)

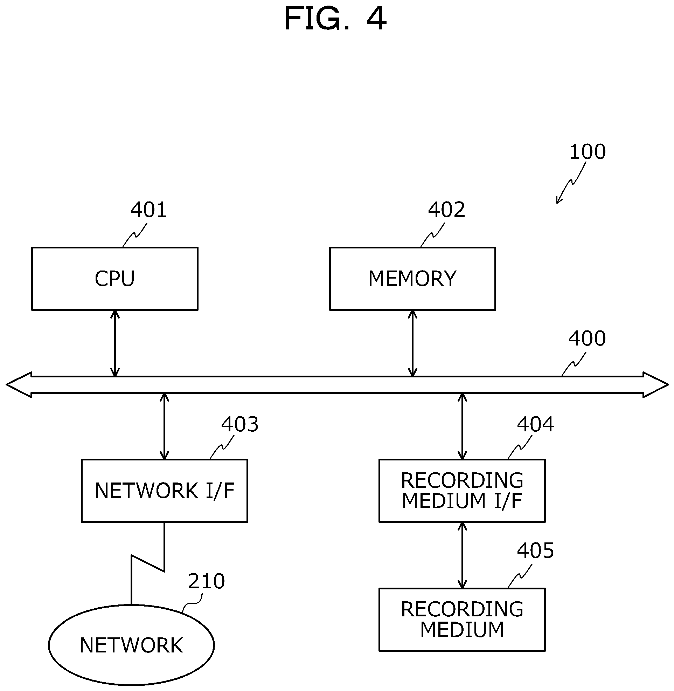

An example of a hardware structure of the information processing apparatus 100 will be described next by using FIG. 4.

FIG. 4 is a block diagram illustrating an example of the hardware structure of the information processing apparatus 100. In FIG. 4, the information processing apparatus 100 includes a central processing unit (CPU) 401, a memory 402, a network interface (I/F) 403, a recording medium I/F 404, and a recording medium 405. The individual components are coupled to one another by a bus 400.

The CPU 401 controls the entire information processing apparatus 100. The memory 402 includes, for example, a read-only memory (ROM), a random-access memory (RAM), a flash ROM, and the like. For example, the flash ROM or the ROM stores various programs, and the RAM is used as a work area of the CPU 401. The programs stored in the memory 402 are loaded by the CPU 401 and cause the CPU 401 to perform coded processes.

The network I/F 403 is coupled to the network 210 through a communication line and is connected to another computer via the network 210. The network I/F 403 controls an interface between the network 210 and internal components, and controls input and output of data to and from the other computer. The network I/F 403 is, for example, a modem, a LAN adapter, or the like.

The recording medium I/F 404 controls reading and writing of data from and to the recording medium 405 in accordance with control of the CPU 401. The recording medium I/F 404 is, for example, a disk drive, a solid-state drive (SSD), a Universal Serial Bus (USB) port, or the like. The recording medium 405 is a nonvolatile memory that stores data written under the control of the recording medium I/F 404. The recording medium 405 is, for example, a disk, a semiconductor memory, a USB memory, or the like. The recording medium 405 may be removable from the information processing apparatus 100.

In addition to the components described above, the information processing apparatus 100 may include, for example, a keyboard, a mouse, a display, a printer, a scanner, a microphone, a speaker, and so on. The information processing apparatus 100 may include a plurality of recording medium I/Fs 404 and a plurality of recording media 405. From the information processing apparatus 100, the recording medium I/F 404 and the recording medium 405 may be omitted.

### (Stored Content of Correspondence Information Management Table 500)

An example of stored content of the correspondence information management table 500 will be described next by using FIG. 5. For example, the correspondence information management table 500 is implemented by a storage area such as the memory 402 or the recording medium 405 of the information processing apparatus 100 illustrated in FIG. 4.

FIG. 5 is an explanatory diagram illustrating an example of the stored content of the correspondence information management table 500. As illustrated in FIG. 5, the correspondence information management table 500 includes fields of an object ID, meta information, a sleep state, and a last update time point. In the correspondence information management table 500, the correspondence information is stored as a record 500-a as a result of setting, for each object, information in each of the fields. "a" is an arbitrary integer.

In the object ID field, an object ID for identifying an object is set. In the meta information field, meta information that indicates an attribute of the object, an attribute of a processing result of the object, or the like is set. In the sleep state field, flag information that indicates whether or not the object is in the sleep state is set. The sleep state is a state in which the processing result of the object has not been updated for a certain period. The last update time point field, a last update time point that is a time point of a last update of the processing result of the object by the object is set.

### (Example of Hardware Structure of Accepting-Side Apparatus 201)

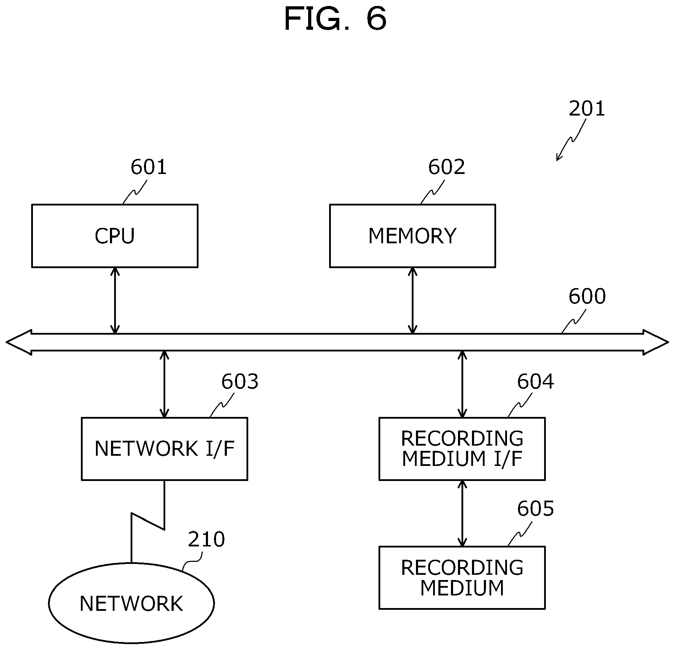

An example of a hardware structure of the accepting-side apparatus 201 will be described next by using FIG. 6.

FIG. 6 is a block diagram illustrating an example of the hardware structure of the accepting-side apparatus 201. In FIG. 6, the accepting-side apparatus 201 includes a CPU 601, a memory 602, a network I/F 603, a recording medium I/F 604, and a recording medium 605. The individual components are coupled to one another by a bus 600.

The CPU 601 controls the entire accepting-side apparatus 201. The memory 602 includes, for example, a ROM, a RAM, a flash ROM, and the like. For example, the flash ROM or the ROM stores various programs, and the RAM is used as a work area of the CPU 601. The programs stored in the memory 602 are loaded by the CPU 601 and cause the CPU 601 to perform coded processes.

The network I/F 603 is connected to the network 210 through a communication line and is connected to another computer via the network 210. The network I/F 603 controls an interface between the network 210 and internal components, and controls input and output of data to and from the other computer. The network I/F 603 is, for example, a modem, a LAN adapter, or the like.

The recording medium I/F 604 controls reading and writing of data from and to the recording medium 605 in accordance with control of the CPU 601. The recording medium I/F 604 is, for example, a disk drive, an SSD, a USB port, or the like. The recording medium 605 is a nonvolatile memory that stores data written under the control of the recording medium I/F 604. The recording medium 605 is, for example, a disk, a semiconductor memory, a USB memory, or the like. The recording medium 605 may be removable from the accepting-side apparatus 201.

In addition to the above-described components, the accepting-side apparatus 201 may include, for example, a keyboard, a mouse, a display, a printer, a scanner, a microphone, a speaker, and so on. The accepting-side apparatus 201 may include a plurality of recording medium I/Fs 604 and a plurality of recording media 605. From the accepting-side apparatus 201, the recording medium I/F 604 and the recording medium 605 may be omitted.

### (Example of Hardware Structure of Execution Apparatus 202)

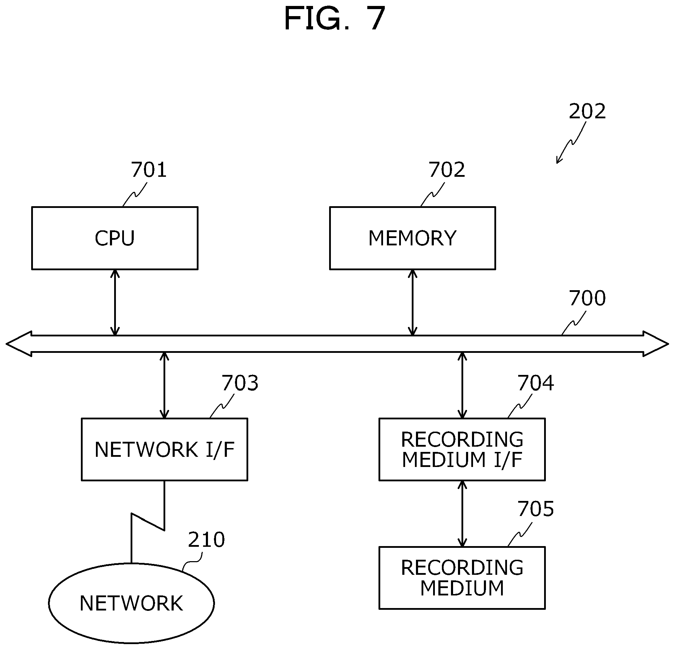

An example of a hardware structure of the execution apparatus 202 will be described next by using FIG. 7.

FIG. 7 is a block diagram illustrating an example of the hardware structure of the execution apparatus 202. In FIG. 7, the execution apparatus 202 includes a CPU 701, a memory 702, a network I/F 703, a recording medium I/F 704, and a recording medium 705. The individual components are coupled to one another by a bus 700.

The CPU 701 controls the entire execution apparatus 202. The memory 702 includes, for example, a ROM, a RAM, a flash ROM, and the like. For example, the flash ROM or the ROM stores various programs, and the RAM is used as a work area of the CPU 701. The programs stored in the memory 702 are loaded by the CPU 701 and cause the CPU 701 to perform coded processes.

The network I/F 703 is connected to the network 210 through a communication line and is connected to another computer via the network 210. The network I/F 703 controls an interface between the network 210 and internal components, and controls input and output of data to and from the other computer. The network I/F 703 is, for example, a modem, a LAN adapter, or the like.

The recording medium I/F 704 controls reading and writing of data from and to the recording medium 705 in accordance with control of the CPU 701. The recording medium I/F 704 is, for example, a disk drive, an SSD, a USB port, or the like. The recording medium 705 is a nonvolatile memory that stores data written under the control of the recording medium I/F 704. The recording medium 705 is, for example, a disk, a semiconductor memory, a USB memory, or the like. The recording medium 705 may be removable from the execution apparatus 202.

In addition to the above-described components, the execution apparatus 202 may include, for example, a keyboard, a mouse, a display, a printer, a scanner, a microphone, a speaker, and so on. The execution apparatus 202 may include a plurality of recording medium I/Fs 704 and a plurality of recording media 705. From the execution apparatus 202, the recording medium I/F 704 and the recording medium 705 may be omitted.

### (Example of Hardware Structure of User Apparatus 203)

For example, an example of a hardware structure of the user apparatus 203 is substantially the same as the example of the hardware structure of the information processing apparatus 100 illustrated in FIG. 4, and thus the description thereof is omitted.

### (Example of Hardware Structure of Store Apparatus 204)

For example, an example of a hardware structure of the store apparatus 204 is substantially the same as the example of the hardware structure of the information processing apparatus 100 illustrated in FIG. 4, and thus the description thereof is omitted.

### (Example of Functional Structure of Stream Processing System 200)

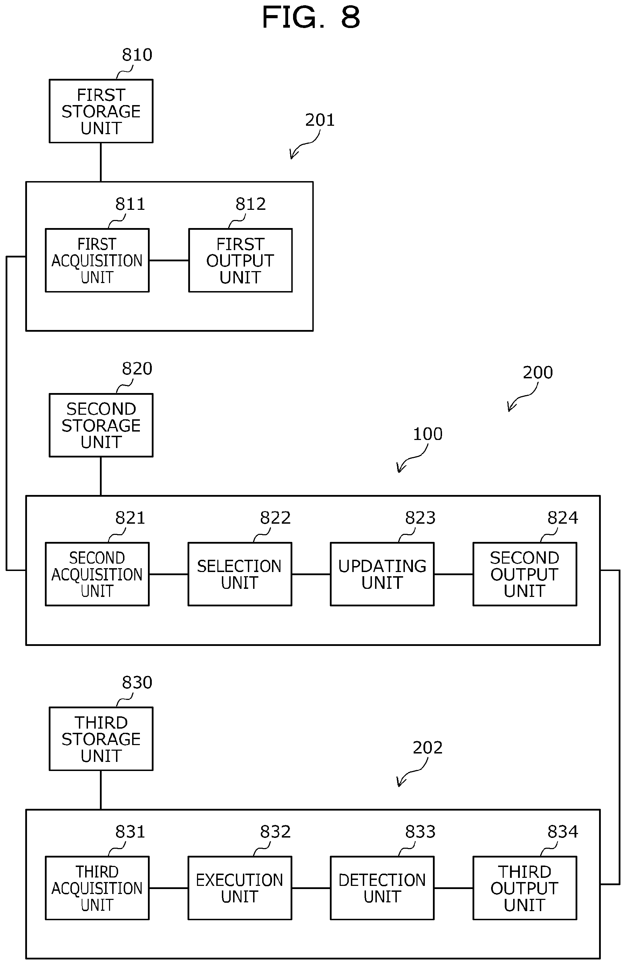

An example of a functional structure of the stream processing system 200 will be described next by using FIG. 8.

FIG. 8 is a block diagram illustrating an example of the functional structure of the stream processing system 200. The accepting-side apparatus 201 includes a first storage unit 810, a first acquisition unit 811, and a first output unit 812.

The first storage unit 810 is implemented by a storage area such as the memory 602 or the recording medium 605 illustrated in FIG. 6, for example. A case where the first storage unit 810 is included in the accepting-side apparatus 201 will be described below. However, the configuration is not limited to this. For example, there may be a case where the first storage unit 810 is included in an apparatus different from the accepting-side apparatus 201 and stored content of the first storage unit 810 may be referred to from the accepting-side apparatus 201.

The first acquisition unit 811 and the first output unit 812 function as an example of a control unit. For example, functions of the first acquisition unit 811 and the first output unit 812 are implemented by causing the CPU 601 to execute a program stored in the storage area such as the memory 602 or the recording medium 605 illustrated in FIG. 6 or by using the network I/F 603, for example. A processing result obtained by each functional unit is stored in the storage area such as the memory 602 or the recording medium 605 illustrated in FIG. 6, for example.

The first storage unit 810 stores various kinds of information to be referred to or updated in the process performed by each functional unit. For example, the first storage unit 810 stores information that enables the information processing apparatus 100 that serves as the transmission destination of the received or generated data to be identified from among the one or more information processing apparatuses 100 included in the stream processing infrastructure 220.

The received data is, for example, a query that includes information for identifying a target period and a condition for extracting a processing result. The query requests execution of a predetermined process on a processing result of a processing unit. The processing unit is, for example, an object. The condition designates, for example, an attribute of the processing result. The predetermined process is, for example, to output the processing result that satisfies the condition. The predetermined process may be, for example, to generate a new processing result by using the processing result that satisfies the condition and output the new processing result. For example, the first storage unit 810 stores information that enables each of the information processing apparatuses 100 included in the stream processing infrastructure 220 to be identified as the transmission destination of the query. The query is, for example, an on-demand query.

The received data is, for example, a first notification. The first notification is a notification that indicates that the processing unit is in the sleep state. The sleep state is a state in which a processing result has not been updated for a certain period. The first notification is a sleep transition notification described later. The first notification may further indicate a time point of the last update of the processing result of the processing unit by this processing unit. For example, the first storage unit 810 stores information that enables the information processing apparatus 100 that is in charge of the processing unit to be identified as the transmission destination of the first notification that indicates that this processing unit is in the sleep state.

The received data is, for example, a second notification. The second notification is a notification that indicates that the processing unit is no longer in the sleep state. The second notification is a sleep cancellation notification described later. For example, the first storage unit 810 stores information that enables the information processing apparatus 100 that is in charge of the processing unit to be identified as the transmission destination of the second notification that indicates that this processing unit is no longer in the sleep state.

The generated data is, for example, a fourth notification generated in response to a received third notification. The third notification is a notification for requesting the stream processing infrastructure 220 to add or delete a processing unit. The third notification is, for example, an object addition notification or object deletion notification described later. The fourth notification is a notification for requesting the information processing apparatus 100 to implement a new processing unit or delete an existing processing unit. For example, the fourth notification is a notification for designating the processing unit which the information processing apparatus 100 is in charge of. For example, the first storage unit 810 stores information that enables the information processing apparatus 100 that is in charge of the processing unit to be identified as the transmission destination of the fourth notification related to this processing unit.

The first acquisition unit 811 acquires various kinds of information for use in a process performed by each functional unit. The first acquisition unit 811 stores the acquired various kinds of information in the first storage unit 810 or outputs the acquired various kinds of information to each functional unit. The first acquisition unit 811 may output the various kinds of information stored in the first storage unit 810 to each functional unit. For example, the first acquisition unit 811 acquires various kinds of information, based on an operation input by the user. For example, the first acquisition unit 811 may receive the various kinds of information from an apparatus different from the accepting-side apparatus 201.

The first acquisition unit 811 acquires, for example, a query. For example, the first acquisition unit 811 acquires the query by receiving the query from the user apparatus 203.

The first acquisition unit 811 acquires, for example, the first notification. For example, the first acquisition unit 811 acquires the first notification by receiving the first notification from the processing unit. For example, the first acquisition unit 811 acquires the first notification by receiving the first notification from the execution apparatus 202 that implements the processing unit.

The first acquisition unit 811 acquires, for example, the second notification. For example, the first acquisition unit 811 acquires the second notification by receiving the second notification from the processing unit. For example, the first acquisition unit 811 acquires the second notification by receiving the second notification from the execution apparatus 202 that implements the processing unit.

The first acquisition unit 811 acquires, for example, the third notification. For example, the first acquisition unit 811 acquires the third notification by receiving the third notification from the processing unit. For example, the first acquisition unit 811 acquires the third notification by receiving the third notification from the execution apparatus 202 that implements the processing unit.

The first acquisition units 811 may accept a start trigger for starting a process of any of the functional units. The start trigger is, for example, a predetermined operation input by a user. The start trigger may be, for example, receipt of predetermined information from another computer. The start trigger may be, for example, output of predetermined information by any of the functional units. For example, the first acquisition unit 811 accepts acquisition of the various kinds of data as the start trigger for starting a process of the first output unit 812.

The first output unit 812 outputs a processing result of at least any of the functional units. The output format is, for example, display on a display, output to a printer for printing, transmission to an external apparatus through the network I/F 603, or storage in a storage area such as the memory 602 or the recording medium 605. Thus, the first output unit 812 may notify the user of the processing result of at least any of the functional units, which may consequently improve the convenience of the accepting-side apparatus 201.

The first output unit 812 transmits, for example, the query to each of the information processing apparatuses 100.

For example, the first output unit 812 identifies, with reference to the first storage unit 810, the information processing apparatus 100 that serves as the transmission destination of the first notification, and transmits the first notification to the identified information processing apparatus 100.

For example, the first output unit 812 identifies, with reference to the first storage unit 810, the information processing apparatus 100 that serves as the transmission destination of the second notification, and transmits the second notification to the identified information processing apparatus 100.

For example, the first output unit 812 generates the fourth notification based on the third notification with reference to the first storage unit 810. For example, the first output unit 812 identifies the information processing apparatus 100 that serves as the transmission destination of the generated fourth notification, and transmits the fourth notification to the identified information processing apparatus 100.

The information processing apparatus 100 includes a second storage unit 820, a second acquisition unit 821, a selection unit 822, an updating unit 823, and a second output unit 824.

The second storage unit 820 is implemented by, for example, a storage area such as the memory 402 or the recording medium 405 illustrated in FIG. 4. A case where the second storage unit 820 is included in the information processing apparatus 100 will be described below. However, the configuration is not limited this. For example, there may be a case where the second storage unit 820 is included in an apparatus different from the information processing apparatus 100 and stored content of the second storage unit 820 may be referred to from the information processing apparatus 100.

The second acquisition unit 821 to the second output unit 824 function as an example of a control unit. For example, functions of the second acquisition unit 821 to the second output unit 824 are implemented by causing the CPU 401 to execute a program stored in the storage area such as the memory 402 or the recording medium 405 illustrated in FIG. 4 or by using the network I/F 403, for example. A processing result obtained by each functional unit is stored in the storage area such as the memory 402 or the recording medium 405 illustrated in FIG. 4, for example.

The second storage unit 820 stores various kinds of information to be referred to or updated in the process performed by each functional unit. The second storage unit 820 stores, for example, the correspondence information. For example, the correspondence information represents, in association with each other, information that indicates each of the processing units included in the stream processing infrastructure 220 and information that indicates a timing of a last update of a processing result of this processing unit by this processing unit.

The information that indicates the timing and is associated with the information that indicates the processing unit includes, for example, information that indicates whether or not this processing unit is in the sleep state. For example, the information that indicates the timing and is associated with the information that indicates that the processing unit may further include information that indicates a time point of a last update of a processing result of this processing unit by this processing unit in a case where this processing unit is in the sleep state.

For example, the correspondence information may represent, in association with one another, the information that indicates the processing unit included in the stream processing infrastructure 220, the information that indicates the timing of the last update of the processing result of this processing unit by this processing unit, and information that indicates an attribute of this processing result. For example, the second storage unit 820 stores the correspondence information management table 500.

The second acquisition unit 821 acquires various kinds of information for use in a process performed by each functional unit. The second acquisition unit 821 stores the acquired various kinds of information in the second storage unit 820 or outputs the acquired various kinds of information to each functional unit. The second acquisition unit 821 may output the various kinds of information stored in the second storage unit 820 to each functional unit. For example, the second acquisition unit 821 acquires the various kinds of information, based on an operation input by the user. For example, the second acquisition unit 821 may receive the various kinds of information from an apparatus different from the information processing apparatus 100.

The second acquisition unit 821 acquires, for example, a query that includes information for identifying a target period and a condition for extracting a processing result. For example, the second acquisition unit 821 acquires the query by receiving the query from the accepting-side apparatus 201.

The second acquisition unit 821 acquires, for example, the first notification. For example, the second acquisition unit 821 acquires the first notification by receiving the first notification from the accepting-side apparatus 201.

The second acquisition unit 821 acquires, for example, the second notification. For example, the second acquisition unit 821 acquires the second notification by receiving the second notification from the accepting-side apparatus 201.

The second acquisition unit 821 accepts, for example, designation of a plurality of processing units which the information processing apparatus 100 is in charge of. For example, the second acquisition unit 821 acquires the fourth notification. For example, the second acquisition unit 821 acquires the fourth notification by receiving the fourth notification from the accepting-side apparatus 201. For example, based on the fourth notification, the second acquisition unit 821 updates designation of the processing units which the information processing apparatus 100 is in charge of.

The second acquisition unit 821 may accept a start trigger for starting a process of any of the functional units. The start trigger is, for example, a predetermined operation input by a user. The start trigger may be, for example, receipt of predetermined information from another computer. The start trigger may be, for example, output of predetermined information by any of the functional units.

For example, the second acquisition unit 821 accepts acquisition of a query as a start trigger for starting a process performed by the selection unit 822 and the second output unit 824. The second acquisition unit 821 accepts acquisition of the first notification, the second notification, or the fourth notification, as a start trigger for starting a process performed by the updating unit 823 and the second output unit 824.

With reference to the correspondence information, based on the acquired query, the selection unit 822 selects any of the processing units included in the stream processing infrastructure 220. For example, with reference to the correspondence information, based on the acquired query, the selection unit 822 selects the processing unit that has a processing result updated in the target period from among the processing units included in the stream processing infrastructure 220. For example, the selection unit 822 selects a processing unit for which the time point indicated by the correspondence information is included in the target period indicated by the query. Consequently, the selection unit 822 may narrow down the processing unit to which the query is transmitted, which may consequently reduce the load on the stream processing infrastructure 220. The selection unit 822 may appropriately select the processing unit that is suitable for executing the predetermined process.

For example, with reference to the correspondence information, based on the accepted query, the selection unit 822 selects a processing unit that is not in the sleep state from among the processing units included in the stream processing infrastructure 220. For example, when a length of the certain period related to the sleep state is longer than a length of the target period, the selection unit 822 selects the processing unit that is not in the sleep state. Consequently, the selection unit 822 may select the plurality of processing units including at least the processing unit that has the processing result updated in the target period. The selection unit 822 may narrow down the processing unit to which the query is transmitted, which may consequently reduce the load on the stream processing infrastructure 220.

For example, with reference to the correspondence information, based on the accepted query, the selection unit 822 selects a processing unit that is in the sleep state and has a processing result updated in the target period from among the processing units included in the stream processing infrastructure 220. For example, when the length of the certain period related to the sleep state is shorter than the length of the target period, the selection unit 822 selects the processing unit that is in the sleep state and has a processing result updated in the target period. Consequently, the selection unit 822 may select the processing unit that is in the sleep state but is suitable for the query to be transmitted to. Thus, the selection unit 822 may appropriately select the processing unit that is suitable for executing the predetermined process.

For example, the selection unit 822 selects a processing unit that has a processing result updated in the target period from among the plurality of processing units for which the designation has been accepted. For example, the selection unit 822 selects the processing unit that has a processing result updated in the target period from among the processing units for which the designation has been updated based on the fourth notification. Thus, the selection unit 822 may cope with a case where the range from which the processing unit is selected is dynamically changed.

The selection unit 822 selects a processing unit that has a processing result updated in the target period and having a designated attribute, from among the processing units included in the stream processing infrastructure 220. Consequently, the selection unit 822 may narrow down the processing unit to which the query is transmitted, which may consequently reduce the load on the stream processing infrastructure 220. The selection unit 822 may appropriately select the processing unit that is suitable for executing the predetermined process.

Based on the received first notification, the updating unit 823 updates the correspondence information. For example, when the first notification is received from a first processing unit, the updating unit 823 updates the information that indicates the timing and is associated with the information that indicates the first processing unit in the correspondence information, based on the received first notification. For example, the updating unit 823 updates the information that indicates whether or not the first processing unit is in the sleep state to information that indicates that the first processing unit is in the sleep state. For example, the updating unit 823 updates the information that indicates the time point of the last update of the processing result by the first processing unit, to the information that indicates the time point included in the first notification. Consequently, the updating unit 823 may enable the processing unit to which the query is transmitted to be appropriately selected based on the correspondence information.

Based on the received second notification, the updating unit 823 updates the correspondence information. For example, when the second notification is received from a second processing unit, the updating unit 823 updates the information that indicates the timing and is associated with the information that indicates the second processing unit in the correspondence information, based on the received second notification. For example, the updating unit 823 updates the information that indicates whether or not the second processing unit is in the sleep state to information that indicates that the second processing unit is not in the sleep state. For example, the updating unit 823 deletes the information that indicates the time point of the last update of the processing result by the second processing unit. Consequently, the updating unit 823 may enable the processing unit to which the query is transmitted to be appropriately selected based on the correspondence information.

The second output unit 824 outputs the processing result of at least any of the functional units. The output format is, for example, display on a display, output to a printer for printing, transmission to an external apparatus through the network I/F 403, or storage in a storage area such as the memory 402 or the recording medium 405. Thus, the second output unit 824 may notify the user of the processing result of at least any of the functional units, which may consequently improve the convenience of the information processing apparatus 100.

The second output unit 824 transmits, to the selected processing unit, a request to execute a predetermined process on a processing result that was updated in the target period and satisfies the condition. The request is, for example, an on-demand query. Thus, the second output unit 824 may cause the selected processing unit to execute the predetermined process.

The execution apparatus 202 includes a third storage unit 830, a third acquisition unit 831, an execution unit 832, a detection unit 833, and a third output unit 834. The execution apparatus 202 implements one or more processing units. For convenience, it is assumed in description below that the execution apparatus 202 implements one processing unit.

The third storage unit 830 is implemented by, for example, a storage area such as the memory 702 or the recording medium 705 illustrated in FIG. 7. A case where the third storage unit 830 is included in the execution apparatus 202 will be described below. However, the configuration is not limited to this. For example, there may be a case where the third storage unit 830 is included in an apparatus different from the execution apparatus 202 and stored content of the third storage unit 830 may be referred to from the execution apparatus 202.

The third acquisition unit 831 to the third output unit 834 function as an example of a control unit. For example, functions of the third acquisition unit 831 to the third output unit 834 are implemented by causing the CPU 701 to execute a program stored in the storage area such as the memory 702 or the recording medium 705 illustrated in FIG. 7 or by using the network I/F 703, for example. A processing result obtained by each functional unit is stored in the storage area such as the memory 702 or the recording medium 705 illustrated in FIG. 7, for example.

The third storage unit 830 stores various kinds of information to be referred to or updated in the process performed by each functional unit. The third storage unit 830 stores states. The states include, for example, a processing result based on the received data. The states may include, for example, the received data.

The third acquisition unit 831 acquires various kinds of information for use in a process performed by each functional unit. The third acquisition unit 831 stores the acquired various kinds of information in the third storage unit 830 or outputs the acquired various kinds of information to each functional unit. The third acquisition unit 831 may output the various kinds of information stored in the third storage unit 830 to each functional unit. For example, the third acquisition unit 831 acquires the various kinds of information, based on an operation input by the user. For example, the third acquisition unit 831 may receive the various kinds of information from an apparatus different from the execution apparatus 202.

The third acquisition unit 831 acquires processing-target data. For example, the third acquisition unit 831 acquires the processing-target data by receiving the processing-target data from the store apparatus 204. Thus, the third acquisition unit 831 may enable a process based on the processing-target data to be executed.

The third acquisition unit 831 acquires a query. For example, the third acquisition unit 831 acquires the query by receiving the query from the information processing apparatus 100. Thus, the third acquisition unit 831 may enable a predetermined process based on the query to be executed.

The third acquisition unit 831 may accept a start trigger for starting a process of any of the functional units. The start trigger is, for example, a predetermined operation input by a user. The start trigger may be, for example, receipt of predetermined information from another computer. The start trigger may be, for example, output of predetermined information by any of the functional units.

For example, the third acquisition unit 831 accepts acquisition of the processing-target data as the start trigger for starting a process of the execution unit 832. For example, the third acquisition unit 831 accepts acquisition of the query as the start trigger for starting a process of the execution unit 832.

In response to acquisition of the processing-target data, the execution unit 832 executes a process on the processing-target data. The execution unit 832 updates a processing result included in the states to a current processing result. Thus, the execution unit 832 may update the processing result to the latest state.

In response to acquisition of a query, the execution unit 832 executes the predetermined process corresponding to the query. For example, the execution unit 832 determines whether or not the processing result included in the states satisfies the condition included in the query. For example, when it is determined that the condition is satisfied, the execution unit 832 executes the predetermined process on the processing result that satisfies the condition.

For example, the execution unit 832 executes a predetermined process of outputting the processing result that satisfies the condition through the third output unit 834. For example, the execution unit 832 executes a predetermined process of outputting information related to the processing result that satisfies the condition through the third output unit 834. The information related to the processing result is, for example, identification information for identifying the store apparatus 204 corresponding to the processing result. Thus, the execution unit 832 may enable the predetermined process corresponding to the query to be executed at the timing when the query is acquired.

The detection unit 833 detects that a certain period has elapsed without any update of a processing result. Thus, the detection unit 833 may detect a timing at which the first notification is transmitted.

After transmitting the first notification, the detection unit 833 detects an update of the processing result of this processing unit by this processing unit. Thus, the detection unit 833 may detect a timing at which the second notification is transmitted.

The third output unit 834 outputs the processing result of at least any of the functional units. The output format is, for example, display on a display, output to a printer for printing, transmission to an external apparatus through the network I/F 703, or storage in a storage area such as the memory 702 or the recording medium 705. Thus, the third output unit 834 may notify the user of the processing result of at least any of the functional units, which may consequently improve the convenience of the execution apparatus 202.

The third output unit 834 outputs the processing result based on the processing-target data. For example, the third output unit 834 transmits the processing result based on the processing-target data to another computer. Thus, the third output unit 834 may enable the processing result based on the processing-target data to be used in another computer.

The third output unit 834 outputs the processing result that satisfies the condition. For example, the third output unit 834 transmits the processing result that satisfies the condition to another computer. The other computer is, for example, the user apparatus 203. Thus, the third output unit 834 may enable the processing result that satisfies the condition to be used in another computer.

The third output unit 834 outputs information related to the processing result that satisfies the condition. For example, the third output unit 834 transmits the information related to the processing result that satisfies the condition to another computer. The other computer is, for example, the user apparatus 203. Thus, the third output unit 834 may enable the information related to the processing result that satisfies the condition to be used in another computer.

The third output unit 834 outputs the first notification in response to an elapse of a certain period without any update of the processing result. For example, the third output unit 834 transmits the first notification to the information processing apparatus 100 in response to the elapse of the certain period without any update of the processing result. Thus, the third output unit 834 may enable the information processing apparatus 100 to appropriately update the correspondence information.

When the processing result of this processing unit is updated by this processing unit after the transmission of the first notification, the third output unit 834 outputs the second notification. For example, when the processing result of this processing unit is updated by this processing unit after the transmission of the first notification, the third output unit 834 transmits the second notification to the information processing apparatus 100. Thus, the third output unit 834 may enable the information processing apparatus 100 to appropriately update the correspondence information.

### (Flow of Operation of Stream Processing System 200)

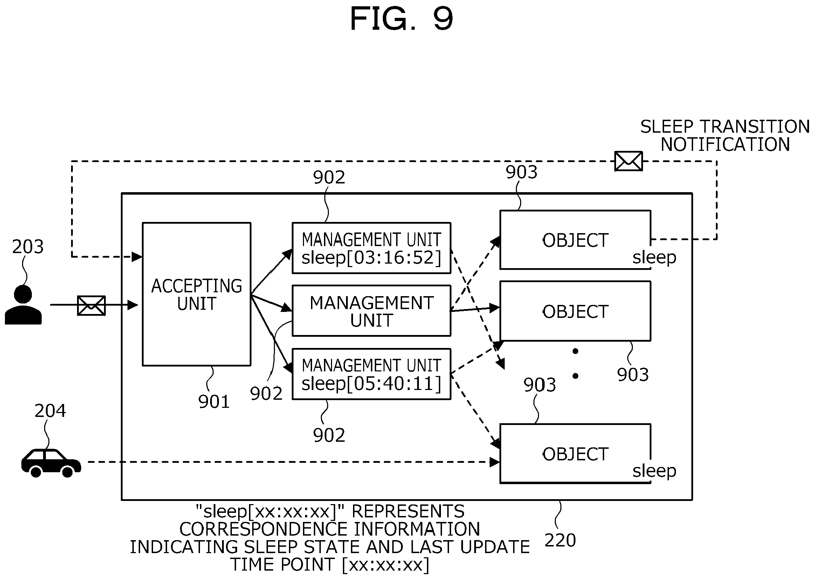

A flow of an operation of the stream processing system 200 will be described next by using FIG. 9.

FIG. 9 is an explanatory diagram illustrating the flow of the operation of the stream processing system 200. As illustrated in FIG. 9, the stream processing infrastructure 220 includes an accepting unit 901, a plurality of management units 902, and a plurality of objects 903. The accepting unit 901 is implemented by the accepting-side apparatus 201. The management units 902 are implemented by the information processing apparatuses 100. The objects 903 are implemented by the execution apparatuses 202.

One or more objects 903 are assigned to each of the management units 902. Each of the management units 902 is in charge of the assigned one or more objects 903. Each of the plurality of management units 902 is assigned a different number. For example, in a case where a number corresponding to a hash value of the object ID for identifying the object 903 matches the number assigned to the management unit 902, the object 903 is assigned to this management unit 902. The number corresponding to the hash value is, for example, a remainder value of the hash value.

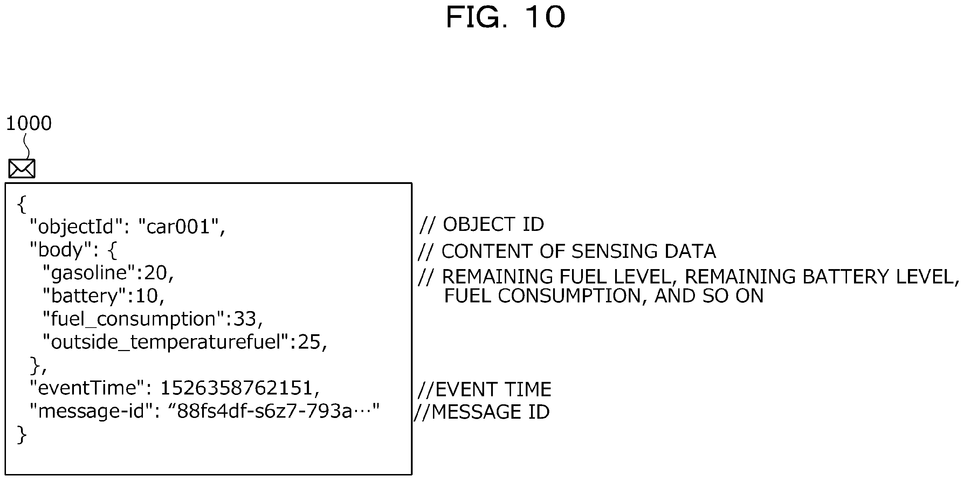

The object 903 receives processing-target data from the store apparatus 204. An example of the processing-target data will be described later by using FIG. 10, for example. The object 903 generates a processing result based on the processing-target data and saves the processing result as a state. For example, each time the processing-target data is received, the object 903 generates a new processing result based on the processing-target data, and updates the processing result included in the states to the generated new processing result. The object 903 may output the generated new processing result.

When the processing result has not been updated for a certain period, the object 903 transitions to the sleep state. After transitioning to the sleep state, the object 903 transmits, to the accepting unit 901, a sleep transition notification that indicates that the object 903 has transitioned to the sleep state. For example, the sleep transition notification includes the object ID for identifying the object 903 that is a transmission source of the sleep transition notification.

The accepting unit 901 receives the sleep transition notification from the object 903. The accepting unit 901 identifies the management unit 902 assigned the number corresponding to the hash value of the object ID included in the sleep transition notification. The accepting unit 901 transmits the sleep transition notification to the identified management unit 902. The management unit 902 receives the sleep transition notification from the accepting unit 901. Based on the received sleep transition notification, the management unit 902 updates the correspondence information management table 500.

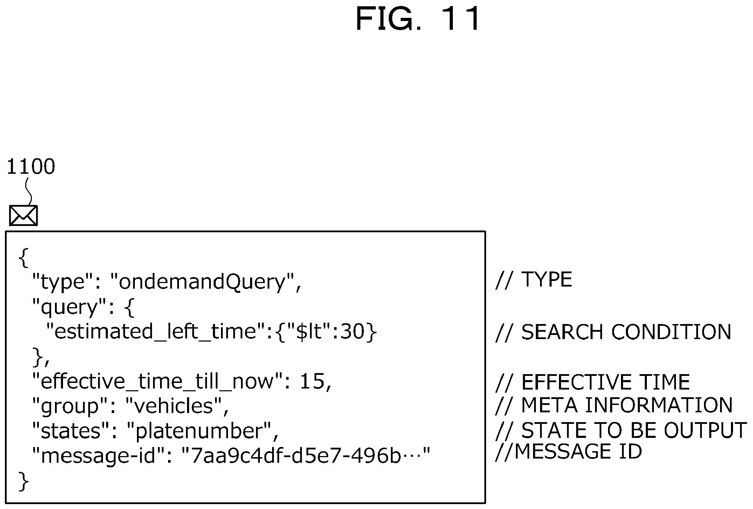

The accepting unit 901 receives an on-demand query from the user apparatus 203. The on-demand query includes an effective time and a search condition for searching for a processing result. The effective time is a reference time for selecting the object 903 that serves as the transmission destination of the on-demand query, based on the last update time point of the last update of the processing result. For example, an example of the on-demand query will be described later by using FIG. 11. The accepting unit 901 transmits the on-demand query to each of the management units 902.

The management unit 902 receives the on-demand query from the accepting unit 901. With reference to the correspondence information management table 500, based on the received on-demand query, the management unit 902 selects the object 903 that serves as the transmission destination of the on-demand query. For example, the management unit 902 selects the object 903 that is not in the sleep state. For example, the management unit 902 may select the object 903 that is in the sleep state but has the last update time point included in a period from the current time point to a time point that is before the current time point by the effective time. The management unit 902 transmits the on-demand query to the selected object 903.

Thus, the management unit 902 may limit the object 903 that serves as the transmission destination of the on-demand query. The management unit 902 may transmit the on-demand query to the limited number of objects 903, and does not have to transmit the on-demand query to each of the objects 903. There may be a case where the number of management units 902 is less than the number of objects 903. In this case, the accepting unit 901 does not have to directly transmit the on-demand query to each object 903, and just transmits the on-demand query to each management unit 902.

Thus, in the stream processing system 200, a load of communication between the accepting unit 901 and the management units 902 may be easily reduced, and a load of communication between the management units 902 and the objects 903 may be easily reduced. The stream processing system 200 may easily avoid a circumstance in which a relatively large number of communications occur in a concentrated manner in a relatively short period. For this reason, the stream processing system 200 may reduce the load on the stream processing infrastructure 220.

### (Example of Processing-Target Data 1000)

An example of processing-target data 1000 will be described next by using FIG. 10.

FIG. 10 is an explanatory diagram illustrating an example of the processing-target data 1000. As illustrated in FIG. 10, the processing-target data 1000 includes an object ID for identifying the object 903. The processing-target data 1000 includes content of sensing data as "body". The processing-target data 1000 includes, for example, measurement values such as a remaining fuel level, a remaining battery level, and a fuel consumption. The processing-target data 1000 includes an event time that indicates a measurement time point of the measurement values above. The processing-target data 1000 includes a message ID. The message ID is identification information for identifying the processing-target data 1000.

### (Example of On-Demand Query 1100)

An example of an on-demand query 1100 will be described next by using FIG. 11.

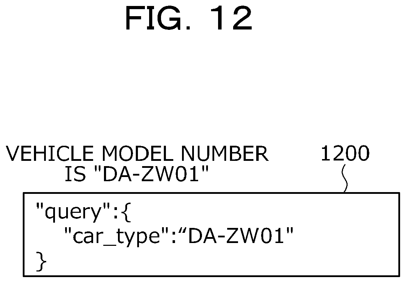

FIG. 11 is an explanatory diagram illustrating an example of the on-demand query 1100. As illustrated in FIG. 11, the on-demand query 1100 includes type information as "type". The type information indicates that the on-demand query 1100 is the on-demand query 1100. The on-demand query 1100 includes, as "query", a search condition for searching for a processing target. In the example of FIG. 11, the search condition indicates that, from among a plurality of processing results of the respective objects 903, a processing result related to a vehicle whose remaining travelable period is within 30 minutes is searched for as the processing target. Other examples of the search condition will be described later by using FIGs. 12 to 15.

The on-demand query 1100 includes an effective time that serves as a reference for limiting the object 903 that serves as the transmission destination of the on-demand query 1100. The on-demand query 1100 includes meta information that serves as a reference for limiting the object 903 that serves as the transmission destination of the on-demand query 1100. The on-demand query 1100 includes designation information for designating which information is to be output from among the states of the objects 903. The designation information is, for example, "platenumber" that corresponds to the vehicle ID for identifying the vehicle. The on-demand query 1100 includes a message ID. The message ID is identification information for identifying the on-demand query 1100.

### (Other Examples of Search Condition)

Other examples of the search condition included in the on-demand query 1100 will be described next by using FIGs. 12 to 15.

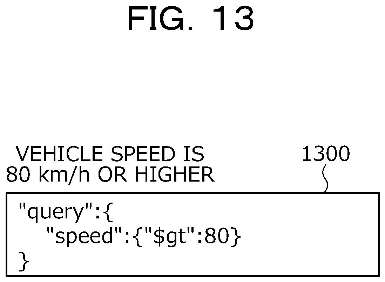

FIGs. 12 to 15 are explanatory diagrams illustrating other examples of the search condition. As illustrated in FIG. 12, the on-demand query 1100 may include data 1200 as "query". The data 1200 indicates that, from among a plurality of processing results of the respective objects 903, a processing result related to a vehicle having a vehicle model number "DA-ZW01" is searched for as the processing target. Next, the description proceeds to that of FIG. 13.

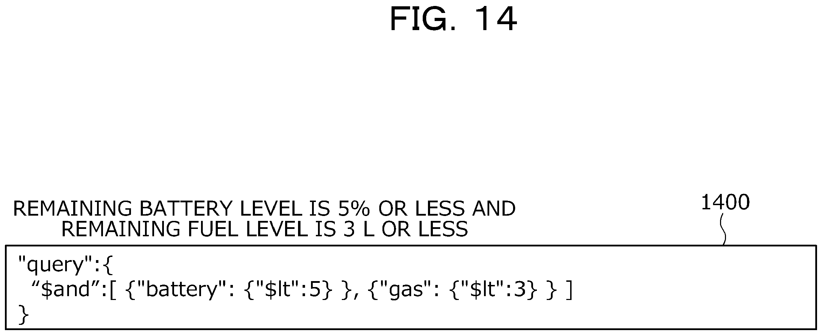

As illustrated in FIG. 13, the on-demand query 1100 may include data 1300 as "query". The data 1300 indicates that, from among a plurality of processing results of the respective objects 903, a processing result related to a vehicle having a vehicle speed of 80 km/h or higher is searched for as the processing target. Next, the description proceeds to that of FIG. 14.

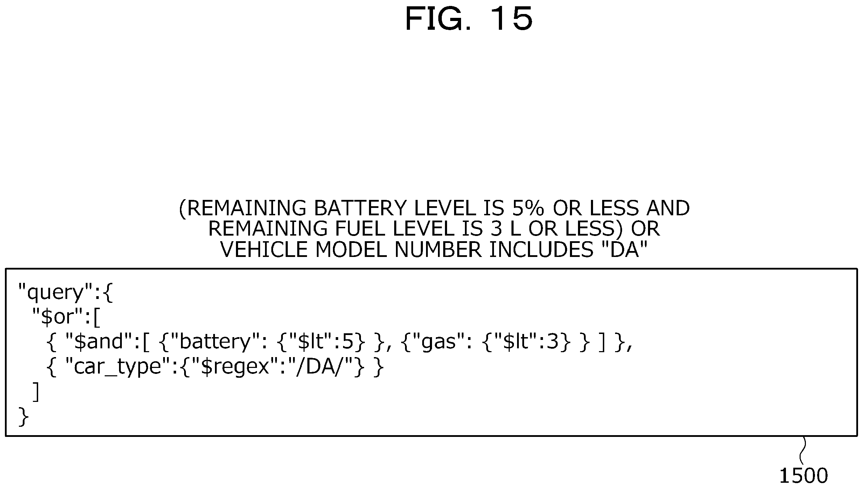

As illustrated in FIG. 14, the on-demand query 1100 may include data 1400 as "query". The data 1400 indicates that, from among a plurality of processing results of the respective objects 903, a processing result related to a vehicle having a remaining battery level is 5% or less and having a remaining fuel level is 3 L or less is searched for as the processing target. Next, the description proceeds to that of FIG. 15.

As illustrated in FIG. 15, the on-demand query 1100 may include data 1500 as "query". The data 1500 indicates a plurality of search conditions. The data 1500 indicates that, from among a plurality of processing results of the respective objects 903, a processing result related to a vehicle whose vehicle model number includes "DA" is searched for as the processing target. The data 1500 indicates that, from among the plurality of processing results of the respective objects 903, a processing result related to a vehicle having a remaining battery level of 5% or less and having a remaining fuel level of 3 L or less is searched for as the processing target.

### (Example of Operation of Stream Processing System 200)

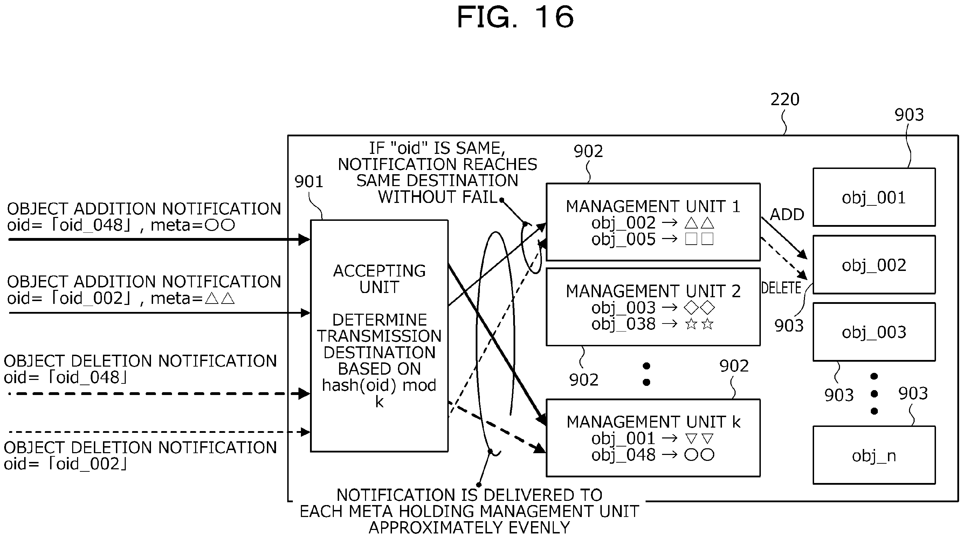

An example of an operation of the stream processing system 200 will be described next by using FIGs. 16 to 20.

FIGs. 16 to 20 are explanatory diagrams illustrating an example of the operation of the stream processing system 200. In FIG. 16, the accepting unit 901 receives an object addition notification. The object addition notification includes an object ID "oid" for identifying the object 903 to be added, and meta information that indicates an attribute or the like of the object 903 to be added. In the example of FIG. 16, the object ID is represented by a numeral added to an end of a character string written as the object 903 in the figure. For example, there are n objects 903.

The object 903 to be added is, for example, a new object 903 for which none of the execution apparatuses 202 is activated. The object 903 to be added may be an existing object 903 for which the execution apparatus 202 has been activated and which the management unit 902 is newly in charge of.

Based on a remainder value obtained by dividing the hash value of the object ID included in the object addition notification by a constant k, the accepting unit 901 identifies the management unit 902 that is in charge of the object 903 to be added. As "k", for example, the number of management units 902 is set. For example, if numbers are assigned to the respective management units 902 sequentially from 1, the accepting unit 901 identifies the management unit 902 having the same number as the remainder value, as the management unit 902 that is in charge of the object 903 to be added. In the example of FIG. 16, the number is indicated by a numeral added to the end of a character string written for the management unit 902.

The accepting unit 901 transmits the object addition notification to the identified management unit 902. The management unit 902 receives the object addition notification from the accepting unit 901. The management unit 902 adds the object 903 indicated by the object ID included in the object addition notification to the object(s) 903 which the management unit 902 is in charge of. The management unit 902 adds a record corresponding to the added object 903 to the correspondence information management table 500. For example, the management unit 902 adds, to the correspondence information management table 500, a record in which the object ID included in the object addition notification, the meta information included in the object addition notification, and the sleep state "no" are associated with one another. The management unit 902 transmits an addition completion message to the object 903 that has been newly added to the object(s) 903 which this management unit 902 is in charge of.

The accepting unit 901 receives an object deletion notification. The object deletion notification includes the object ID "oid" for identifying the object 903 to be deleted. The object 903 to be deleted is an existing object 903 for which the execution apparatus 202 has been activated.

Based on a remainder value obtained by dividing the hash value of the object ID included in the object deletion notification by a constant k, the accepting unit 901 identifies the management unit 902 that is in charge of the object 903 to be deleted. As "k", for example, the number of management units 902 is set. For example, if numbers are assigned to the respective management units 902 sequentially from 1, the accepting unit 901 identifies the management unit 902 having the same number as the remainder value, as the management unit 902 that is in charge of the object 903 to be deleted. In the example of FIG. 16, the number is indicated by a numeral added to the end of a character string written for the management unit 902.

The accepting unit 901 transmits the object deletion notification to the identified management unit 902. The management unit 902 receives the object deletion notification from the accepting unit 901. The management unit 902 deletes the object 903 indicated by the object ID included in the object deletion notification from the object(s) 903 which the management unit 902 is in charge of. The management unit 902 deletes a record corresponding to the deleted object 903 from the correspondence information management table 500. For example, the management unit 902 deletes a record including the object ID included in the object deletion notification, from the correspondence information management table 500. The management units 902 transmits a deletion completion message to the object 903 that has been deleted from the object(s) 903 which this management unit 902 is in charge of.

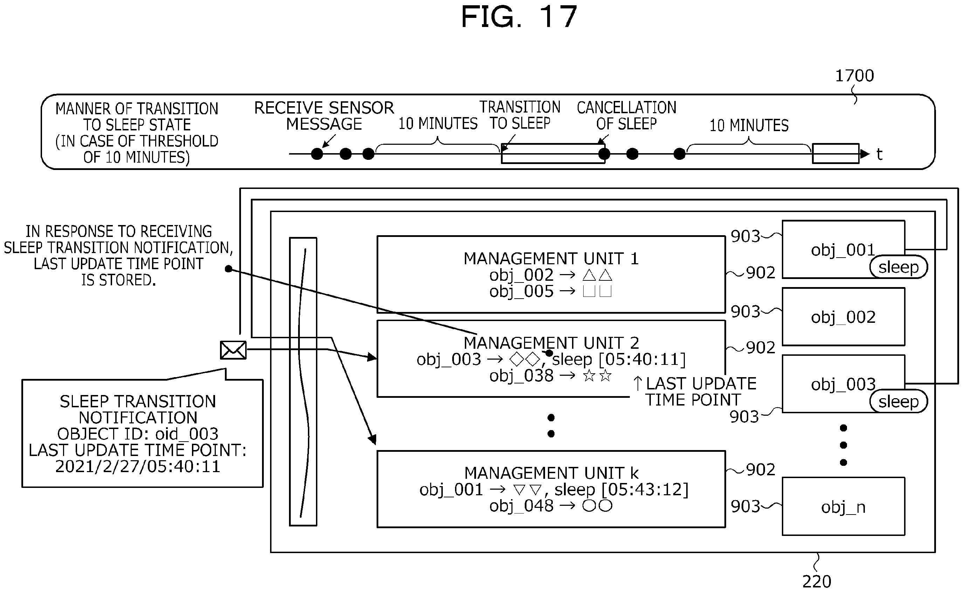

Thus, the accepting unit 901 may cause the individual management units 902 to be in charge of the plurality of objects 903 in a distributed manner, based on the remainder value obtained by dividing the hash value of the object ID by the constant k. Therefore, the accepting unit 901 may level the processing loads on the respective management units 902. The accepting unit 901 may also level the data amounts of the respective management units 902. Next, the description proceeds to that of FIG. 17.

As illustrated in FIG. 17, the object 903 stores 10 minutes as a threshold for transition to the sleep state. As illustrated in a graph 1700, when 10 minutes has elapsed without receiving the sensing data and without updating the processing result included in the states, the object 903 transitions to the sleep state. As illustrated in the graph 1700, when the object 903 receives the sensing data and updates the processing result included in the states after transitioning to the sleep state, the object 903 cancels the sleep state.

Intervals at which the object 903 receives the sensing data tend to vary. For example, in the stream processing infrastructure 220, the number of objects 903 that do not update the processing result included in the states for a certain period sometimes increases relatively. For example, when the store apparatus 204 is mounted on a vehicle, the store apparatus 204 sometimes does not transmit the sensing data to the objects 903 while the vehicle is stationary, is traveling in a tunnel, or the like.

On the other hand, there may be a case where the user considers that grasping the states obtained before the predetermined time is unnecessary. Therefore, it is considered that it is sometimes unnecessary to enable the processing result of the object 903 that has not updated the processing result included in the states for a certain period to be referred to by the user. Thus, it is considered that the load on the stream processing infrastructure 220 may be reduced without reducing the convenience of the user if the management unit 902 excludes the object 903 that is in the sleep state from the transmission destination of the on-demand query.

In response to transitioning to the sleep state, the object 903 transmits a sleep transition notification to the accepting unit 901. The sleep transition notification includes, for example, an object ID for identifying the object 903 that serves as the transmission source and has transitioned to the sleep state, and a last update time point that indicates a time point of a last update of the processing result included in the states by the object 903 that serves as the transmission source and has transitioned to the sleep state. In the example of FIG. 17, the object ID is represented by a numeral added to an end of a character string written as the object 903 in the figure. For example, there are n objects 903.

For example, since the accepting unit 901 is located upstream, the object 903 re-inputs the sleep transition notification to the accepting unit 901 via outside of the stream processing infrastructure 220. In the stream processing infrastructure 220, the load of re-inputting tends increase relatively. For example, the load of re-inputting is likely to increase due to protocol conversion, serialization, deserialization, and the like. The object 903 may re-input the sleep transition notification to the accepting unit 901 limitedly in a case of transitioning to the sleep state. For this reason, the object 903 may avoid an operation of "re-inputting an update time point of the processing result included in the states to the accepting unit 901 each time the processing result included in the states is updated". The object 903 may suppress an increase in load on the stream processing infrastructure 220.

Based on a remainder value obtained by dividing the hash value of the object ID included in the sleep transition notification by a constant k, the accepting unit 901 identifies the management unit 902 that is in charge of the object 903 that has transitioned to the sleep state. As "k", for example, the number of management units 902 is set. For example, if numbers are assigned to the respective management units 902 sequentially from 1, the accepting unit 901 identifies the management unit 902 having the same number as the remainder value, as the management unit 902 that is in charge of the object 903 that has transitioned to the sleep state. In the example of FIG. 17, the number is indicated by a numeral added to the end of a character string written for the management unit 902.

The accepting unit 901 transmits the sleep transition notification to the identified management unit 902. The management unit 902 receives the sleep transition notification. The management unit 902 sets the flag information "yes", the object ID included in the sleep transition notification, and the last update time point included in the sleep transition notification, in a record, of the correspondence information management table 500, including the object ID included in the sleep transition notification. The flag information "yes" indicates that the corresponding object 903 is in the sleep state. Thus, the management unit 902 may appropriately select the transmission destination of the on-demand query 1100 to be received thereafter, with reference to the correspondence information management table 500.

In response to cancellation of the sleep state, the object 903 transmits a sleep cancellation notification to the accepting unit 901. For example, the sleep cancellation notification includes the object ID for identifying the object 903 that serves as the transmission source and has canceled the sleep state. In the example of FIG. 17, the object ID is represented by a numeral added to the end of the character string written as the object 903 in the figure. For example, there are n objects 903.

For example, since the accepting unit 901 is located upstream, the object 903 re-inputs the sleep cancellation notification to the accepting unit 901 via outside of the stream processing infrastructure 220. In the stream processing infrastructure 220, the load of re-inputting tends increase relatively. The object 903 may re-input the sleep cancellation notification to the accepting unit 901 limitedly in a case of canceling the sleep state. For this reason, the object 903 may avoid an operation of "re-inputting an update time point of the processing result included in the states to the accepting unit 901 each time the processing result included in the states is updated". The object 903 may suppress an increase in load on the stream processing infrastructure 220.

Based on a remainder value obtained by dividing the hash value of the object ID included in the sleep cancellation notification by a constant k, the accepting unit 901 identifies the management unit 902 that is in charge of the object 903 that has cancelled the sleep state. As "k", for example, the number of management units 902 is set. For example, if numbers are assigned to the respective management units 902 sequentially from 1, the accepting unit 901 identifies the management unit 902 having the same number as the remainder value, as the management unit 902 that is in charge of the object 903 that has cancelled the sleep state. In the example of FIG. 17, the number is indicated by the numeral added to the end of a character string written for the management unit 902.

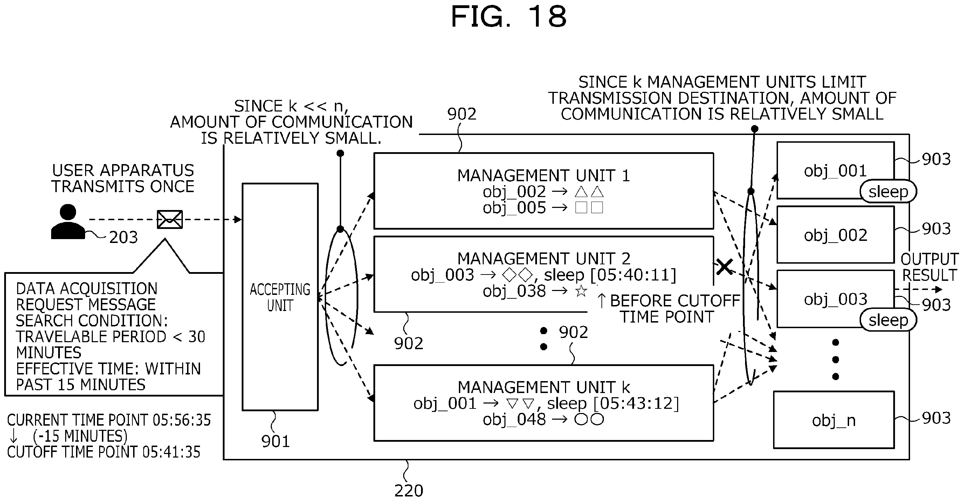

The accepting unit 901 transmits the sleep cancellation notification to the identified management unit 902. The management unit 902 receives the sleep cancellation notification. The management unit 902 updates the flag information "yes" to "no" in a record, of the correspondence information management table 500, including the object ID included in the sleep cancellation notification, and deletes the last update time point of the record. Thus, the management unit 902 may appropriately select the transmission destination of the on-demand query 1100 to be received thereafter, with reference to the correspondence information management table 500. Next, the description proceeds to that of FIG. 18.

In FIG. 18, the user apparatus 203 transmits the on-demand query 1100 to the accepting unit 901, based on an operation input by the user. The on-demand query 1100 includes, for example, a search condition and an effective time. The search condition is, for example, a condition of the travelable period < 30 minutes. The effective time is, for example, within past 15 minutes. In the description below, a time point back from the current time point by the effective time may be referred to as a "cutoff time point".

The accepting units 901 transmits the on-demand query 1100 to each of the management units 902. The management unit 902 receives the on-demand query 1100 from the accepting unit 901. In response to receiving the on-demand query 1100, the management unit 902 selects the object 903 that serves as the transmission destination of the on-demand query 1100.

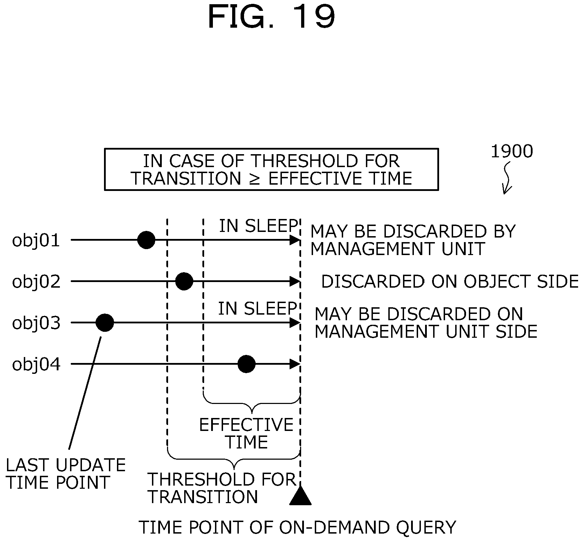

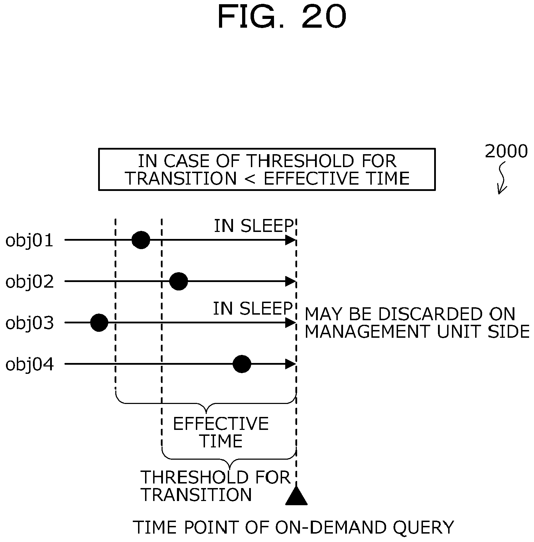

For example, with reference to the correspondence information management table 500, the management unit 902 selects, as the transmission destination of the on-demand query 1100, the object 903 that is not in the sleep state. For example, with reference to the correspondence information management table 500, the management unit 902 may select, as the transmission destination of the on-demand query 1100, the object 903 that is in the sleep state but whose last update time point is after the cutoff time point. For example, the management unit 902 may exclude the object 903 that is in the sleep state and whose last update time point is before the cutoff time point, from the transmission destination of the on-demand query 1100. A specific example of selecting the transmission destination of the on-demand query 1100 will be described later by using FIGs. 19 and 20, for example.

The object 903 receives the on-demand query 1100. The object 903 executes a predetermined process based on the on-demand query 1100. For example, the object 903 determines whether or not the processing result included in the states satisfies the search condition. For example, the object 903 determines whether or not the travelable period, which is the processing result included in the states, is within 30 minutes. For example, when the processing result satisfies the search condition, the object 903 outputs information related to the processing result that satisfies the search result. For example, the object 903 transmits the vehicle ID for identifying the vehicle corresponding to the processing result in which the travelable period is within 30 minutes, to another computer. The other computer is, for example, the user apparatus 203. Thus, the object 903 enables information desired by the user to be referred to in response to the on-demand query 1100.

Since the user apparatus 203 may just transmit one on-demand query 1100 to the accepting unit 901, an increase in load on the stream processing infrastructure 220 may be suppressed. The accepting unit 901 does not have to transmit the on-demand query 1100 to the n objects 903, and may just transmit the on-demand query 1100 to the k management units 902. As a result, since k << n, the accepting unit 901 may suppress an increase in load on the stream processing infrastructure 220. The management unit 902 does not have to transmit the on-demand query 1100 to all the objects 903 which this management unit 902 is in charge of. As a result, the management unit 902 may suppress an increase in load on the stream processing infrastructure 220.

As described above, the stream processing system 200 may reduce the load on the stream processing infrastructure 220. For example, the load is a communication load and a processing load. Thus, the stream processing system 200 may suppress an adverse effect of transmission and reception of the on-demand query 1100 on transmission and reception of the sensing data. The stream processing system 200 may shorten a period taken for enabling information desired by the user to be referred to in response to the on-demand query 1100. The user may refer to only desired information. Thus, the work load may be reduced. Next, the description proceeds to that of FIG. 19.

As illustrated in a table 1900 in FIG. 19, in a case of a threshold for transition to the sleep state ≥ the effective time, the management unit 902 may select the object 903 that is not in the sleep state. By selecting the object 903 that is not in the sleep state, the management unit 902 may appropriately select the object 903 of which the last update time point is at least after the cutoff time point and to which the on-demand query 1100 is preferably transmitted. By not selecting the object 903 that is in the sleep state, the management unit 902 may reduce the load on the stream processing infrastructure 220.

At this time, the management unit 902 may sometimes select the object 903 that is not in the sleep state and whose last update time point is before the cutoff time point. However, based on the on-demand query 1100, the selected object 903 may determine that the processing result included in the states does not satisfy the search condition, and may discard the on-demand query 1100. Thus, the object 903 may reduce a communication load for output. Next, the description proceeds to that of FIG. 20.

As illustrated in a table 2000 in FIG. 20, in a case of the threshold for transition to the sleep state < the effective time, the management unit 902 may select the object 903 that is in the sleep state but whose last update time point is after the cutoff time point, in addition to the object 903 that is not in the sleep state. In this case, the management unit 902 may appropriately select the object 903 of which the last update time point is after the cutoff time point and to which the on-demand query 1100 is preferably transmitted. By not selecting the object 903 whose last update time point is before the cutoff time point, the management unit 902 may reduce the load on the stream processing infrastructure 220.

A case where the threshold for transition to the sleep state is fixed has been described. However, the configuration is not limited to this. For example, there may be a case where the threshold for transition to the sleep state is variable. For example, in a case where chattering in which transition to the sleep state and cancellation of the sleep state are repeated in a relatively short period occurs in the object 903, the threshold may be increased. For example, as the number of objects 903 included in the stream processing infrastructure 220 increases, the threshold may increase within an allowable range set in advance.

A case where the number of management units 902 is fixed has been described. However, the configuration is not limited to this. For example, there may be a case where the number of management units 902 is variable. For example, there may be a case where the number of management units 902 is dynamically changed based on a cost function for estimating the load on the stream processing infrastructure 220. A case where in response to an elapse of a certain period without any update of the processing result included in the states, the object 903 transitions to the sleep state and transmits the sleep transition notification including the last update time point to the management unit 902 has been described. However, the configuration is not limited to this. For example, there may be a case where the object 903 transmits the last update time point to the management unit 902 each time a certain period elapses.

### (Procedure of Accepting Process)

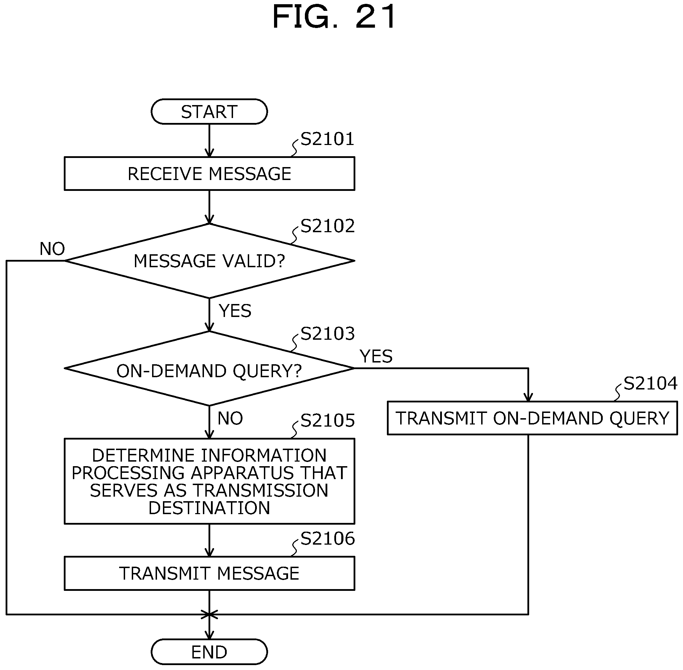

An example of a procedure of an accepting process executed by the accepting-side apparatus 201 will be described next by using FIG. 21. For example, the accepting process is executed by the accepting unit 901 implemented by the accepting-side apparatus 201. The accepting process is implemented by, for example, the CPU 601 illustrated in FIG. 6, a storage area such as the memory 602 or the recording medium 605 illustrated in FIG. 6, and the network I/F 603 illustrated in FIG. 6.

FIG. 21 is a flowchart illustrating an example of the procedure of the accepting process. As illustrated in FIG. 21, the accepting-side apparatus 201 receives a message from the user apparatus 203 (step S2101).

Next, the accepting-side apparatus 201 determines whether or not the message is valid (step S2102). If the message is not valid (step S2102: No), the accepting-side apparatus 201 ends the accepting process. On the other hand, if the message is valid (step S2102: Yes), the accepting-side apparatus 201 proceeds to processing in step S2103.

In step S2103, the accepting-side apparatus 201 determines whether or not the type of the received message is the on-demand query (step S2103). If the type of the received message is the on-demand query (step S2103: Yes), the accepting-side apparatus 201 proceeds to processing in step S2104. On the other hand, if the type of the received message is not the on-demand query (step S2103: No), the accepting-side apparatus 201 proceeds to processing in step S2105.

In step S2104, the accepting-side apparatus 201 transmits the on-demand query to each of the information processing apparatuses 100 (step S2104). The accepting-side apparatus 201 then ends the accepting process.

In step S2105, the accepting-side apparatus 201 determines the information processing apparatus 100 that serves as the transmission destination of the received message, based on the object ID included in the received message (step S2105). Next, the accepting-side apparatus 201 transmits the received message to the determined information processing apparatus 100 (step S2106). The accepting-side apparatus 201 then ends the accepting process.

### (Procedure of Management Process)

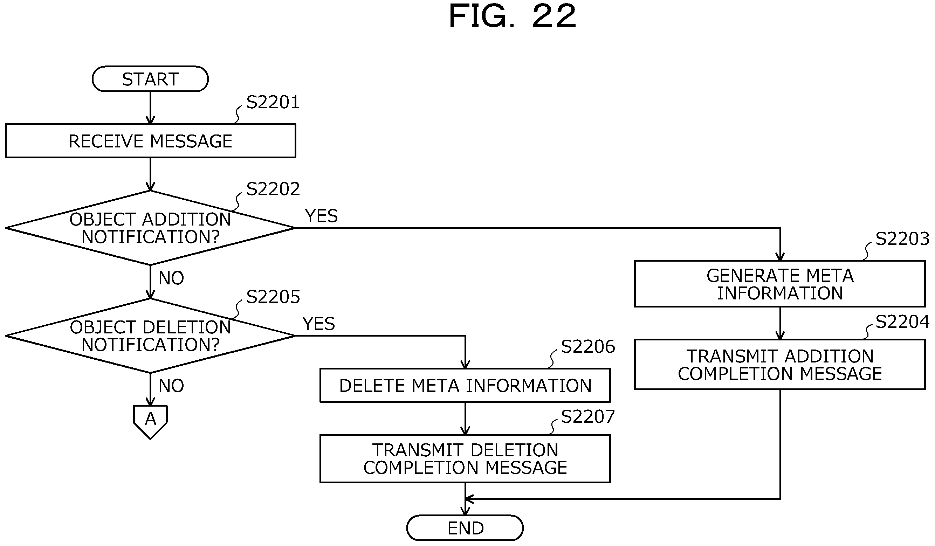

An example of a procedure of a management process executed by the information processing apparatus 100 will be described next by using FIGs. 22 to 24. The management process is implemented by, for example, the CPU 401 illustrated in FIG. 4, a storage area such as the memory 402 or the recording medium 405 illustrated in FIG. 4, and the network I/F 403 illustrated in FIG. 4.

FIGs. 22 to 24 are flowcharts illustrating an example of the procedure of the management process. In FIG. 22, the information processing apparatus 100 receives a message from the accepting-side apparatus 201 (step S2201).

Next, the information processing apparatus 100 determines whether or not the type of the received message is the object addition notification (step S2202). When the type of the received message is the object addition notification (step S2202: Yes), the information processing apparatus 100 proceeds to processing in step S2203. On the other hand, when the type of the received message is not the object addition notification (step S2202: No), the information processing apparatus 100 proceeds to processing in step S2205.

In step S2203, the information processing apparatus 100 generates meta information of the object to be added and stores the meta information as the states (step S2203). Next, the information processing apparatus 100 transmits an addition completion message to the object to be added (step S2204). The information processing apparatus 100 then ends the management process.

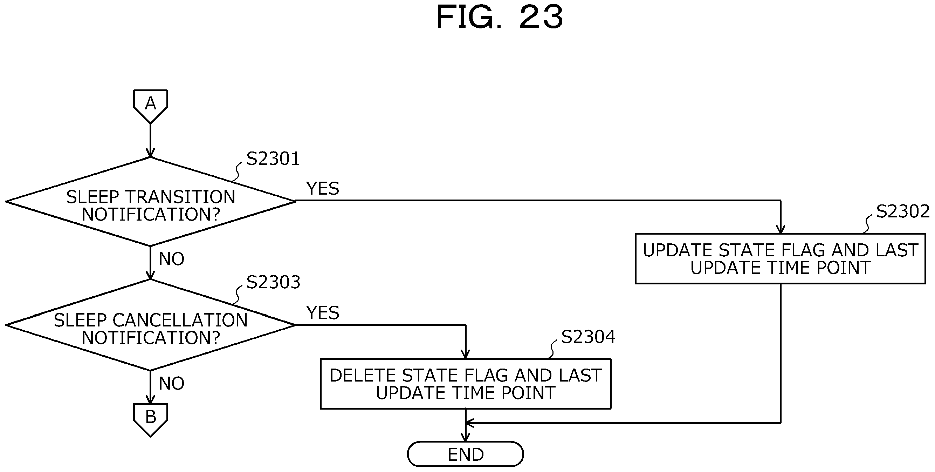

In step S2205, the information processing apparatus 100 determines whether or not the type of the received message is the object deletion notification (step S2205). When the type of the received message is the object deletion notification (step S2205: Yes), the information processing apparatus 100 proceeds to processing in step S2206. On the other hand, when the type of the received message is not the object deletion notification (step S2205: No), the information processing apparatus 100 proceeds to processing in step S2301 in FIG. 23.

In step S2206, the information processing apparatus 100 deletes the meta information of the object to be deleted from the states (step S2206). Next, the information processing apparatus 100 transmits the deletion completion message to the deleted object (step S2207). The information processing apparatus 100 then ends the management process. Next, the description proceeds to that of FIG. 23.

In FIG. 23, the information processing apparatus 100 determines whether or not the type of the received message is the sleep transition notification related to any of the objects (step S2301). When the type of the received message is the sleep transition notification (step S2301: Yes), the information processing apparatus 100 proceeds to processing in step S2302. On the other hand, when the type of the received message is not the sleep transition notification (step S2301: No), the information processing apparatus 100 proceeds to processing in step S2303.

In step S2302, based on the sleep transition notification related to any of the objects, the information processing apparatus 100 updates the state flag and the last update time point, of this object, included in the states (step S2302). The information processing apparatus 100 then ends the management process.

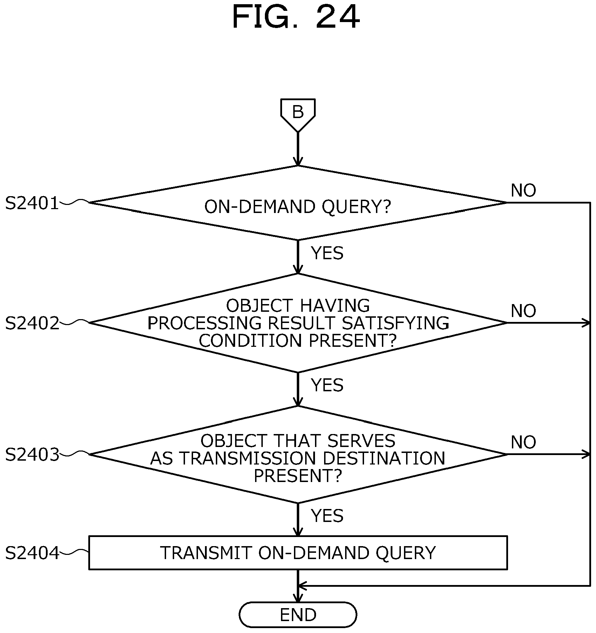

In step S2303, the information processing apparatus 100 determines whether or not the type of the received message is the sleep cancellation notification related to any of the objects (step S2303). When the type of the received message is the sleep cancellation notification (step S2303: Yes), the information processing apparatus 100 proceeds to processing in step S2304. On the other hand, when the type of the received message is not the sleep cancellation notification (step S2303: No), the information processing apparatus 100 proceeds to processing in step S2401 in FIG. 24.

In step S2304, based on the sleep cancellation notification related to any of the objects, the information processing apparatus 100 deletes the state flag and the last update time point of this object from the states (step S2304). The information processing apparatus 100 then ends the management process. Next, the description proceeds to that of FIG. 24.

In FIG. 24, the information processing apparatus 100 determines whether or not the type of the received message is the on-demand query (step S2401). When the type of the received message is the on-demand query (step S2401: Yes), the information processing apparatus 100 proceeds to processing in step S2402. On the other hand, when the type of the received message is not the on-demand query (step S2401: No), the information processing apparatus 100 ends the management process.

In step S2402, the information processing apparatus 100 determines whether or not there is an object having a processing result that satisfies the condition included in the on-demand query, based on the meta information of each object managed by this information processing apparatus 100 (step S2402). When there is an object (step S2402: Yes), the information processing apparatus 100 proceeds to processing in step S2403. On the other hand, when there is no object (step S2402: No), the information processing apparatus 100 ends the management process.

In step S2403, the information processing apparatus 100 determines whether or not there is an object that serves as the transmission destination (step S2403). For example, the information processing apparatus 100 determines whether or not there is an object that serves as the transmission destination among objects having a processing result that satisfies the condition, based on the state flag and the last update time point included in the states of each object managed by this information processing apparatus 100. When there is an object that serves as the transmission destination (step S2403: Yes), the information processing apparatus 100 proceeds to processing in step S2404. On the other hand, when there is no object that serves as the transmission destination (step S2403: No), the information processing apparatus 100 ends the management process.

In step S2404, the information processing apparatus 100 transmits the on-demand query to the object that serves as the transmission destination among the objects having the processing result that satisfies the condition (step S2404). The information processing apparatus 100 then ends the management process.

### (Procedure of Execution Process)

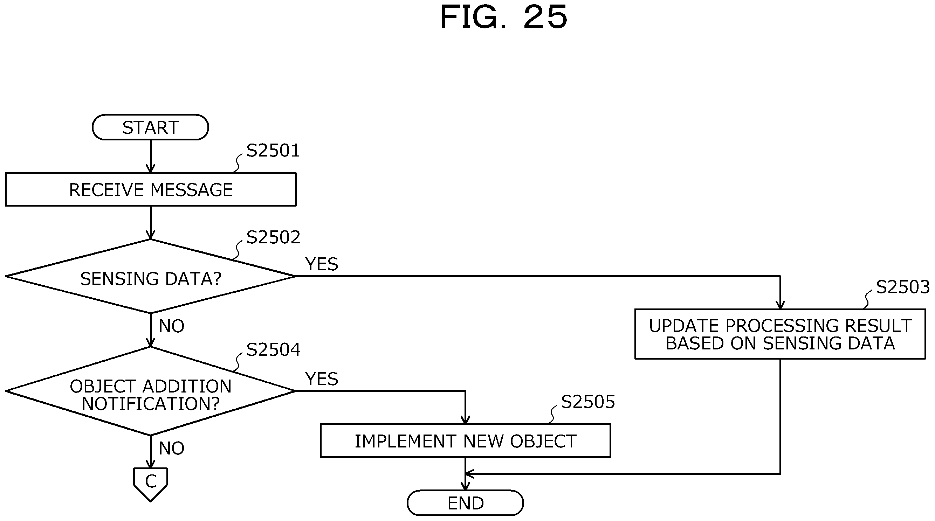

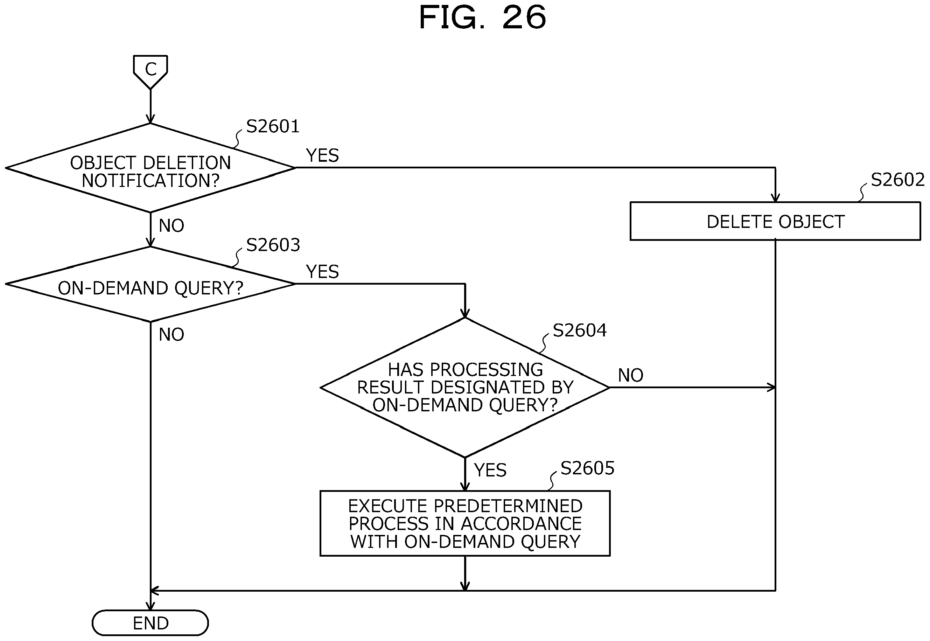

An example of a procedure of an execution process executed by the execution apparatus 202 will be described next by using FIGs. 25 and 26. The execution process is implemented by, for example, the CPU 701 illustrated in FIG. 7, a storage area such as the memory 702 or the recording medium 705 illustrated in FIG. 7, and the network I/F 703 illustrated in FIG. 7.

FIGs. 25 and 26 are flowcharts illustrating an example of the procedure of the execution process. In FIG. 25, the execution apparatus 202 receives a message from the information processing apparatus 100 (step S2501).

Next, the execution apparatus 202 determines whether or not the type of the received message is sensing data (step S2502). When the type of the received message is the sensing data (step S2502: Yes), the execution apparatus 202 proceeds to processing in step S2503. On the other hand, when the type of the received message is not the sensing data (step S2502: No), the execution apparatus 202 proceeds to processing in step S2504.

In step S2503, the execution apparatus 202 updates the processing result based on the sensing data among the states of any of the objects implemented therein (step S2503). The execution apparatus 202 then ends the execution process.

In step S2504, the execution apparatus 202 determines whether or not the type of the received message is the object addition notification (step S2504). If the type of the received message is the object addition notification (step S2504: Yes), the execution apparatus 202 proceeds to processing in step S2505. On the other hand, if the type of the received message is not the object addition notification (step S2504: No), the execution apparatus 202 proceeds to processing in step S2601 in FIG. 26.

In step S2505, the execution apparatus 202 implements a new object therein (step S2505). The execution apparatus 202 then ends the execution process. Next, the description proceeds to that of FIG. 26.

In FIG. 26, the execution apparatus 202 determines whether or not the type of the received message is the object deletion notification (step S2601). When the type of the received message is the object deletion notification (step S2601: Yes), the execution apparatus 202 proceeds to processing in step S2602. On the other hand, when the type of the received message is not the object deletion notification (step S2601: No), the execution apparatus 202 proceeds to processing in step S2603.

In step S2602, the execution apparatus 202 deletes an object designated by the object deletion notification among the objects implemented therein (step S2602). The execution apparatus 202 then ends the execution process.

In step S2603, the execution apparatus 202 determines whether or not the type of the received message is the on-demand query (step S2603). When the type of the received message is the on-demand query (step S2603: Yes), the execution apparatus 202 proceeds to processing in step S2604. On the other hand, when the type of the received message is not the on-demand query (step S2603: No), the execution apparatus 202 ends the execution process.

In step S2604, the execution apparatus 202 determines whether or not the object implemented therein has a processing result designated by the on-demand query (step S2604). When the object has the designated processing result (step S2604: Yes), the execution apparatus 202 proceeds to processing in step S2605. On the other hand, when the object does not have the designated processing result (step S2604: No), the execution apparatus 202 ends the execution process.

In step S2605, the execution apparatus 202 executes a predetermined process in accordance with the on-demand query, with the object having the processing result designated by the on-demand query among objects implemented therein (step S2605). The execution apparatus 202 then ends the execution process.

### (Procedure of Transition Process)

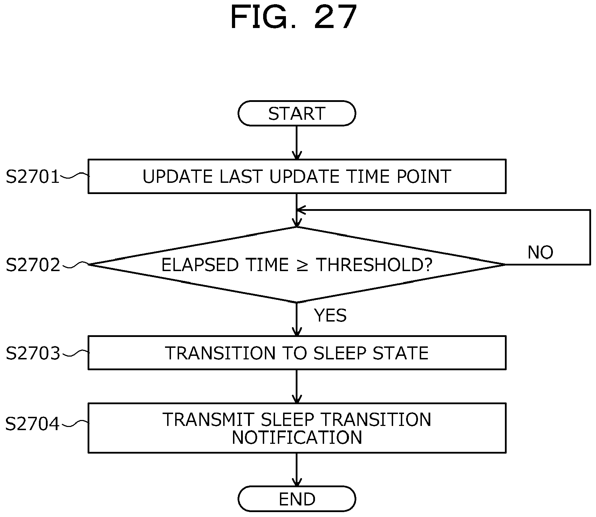

An example of a procedure of a transition process executed by the execution apparatus 202 will be described next by using FIG. 27. The transition process is implemented by, for example, the CPU 701 illustrated in FIG. 7, a storage area such as the memory 702 or the recording medium 705 illustrated in FIG. 7, and the network I/F 703 illustrated in FIG. 7.

FIG. 27 is a flowchart illustrating an example of the procedure of the transition process. In FIG. 27, in response to updating, based on the sensing data, the processing result of the states of any of the objects implemented therein, the execution apparatus 202 updates the last update time point of the states of this object (step S2701).

Next, the execution apparatus 202 determines whether or not an elapsed period from the last update time point to the current time point is equal to or longer than a threshold (step S2702). When the elapsed period is shorter than the threshold (step S2702: No), the execution apparatus 202 returns to the processing in step S2702. On the other hand, when the elapsed time is equal to or longer than the threshold (step S2702: Yes), the execution apparatus 202 proceeds to processing in step S2703.

In step S2703, the execution apparatus 202 transitions to the sleep state (step S2703). Next, the execution apparatus 202 transmits the sleep transition notification that indicates that the object has transitioned to the sleep state, to the accepting-side apparatus 201 (step S2704). The execution apparatus 202 then ends the transition process.

### (Procedure of Cancellation Process)

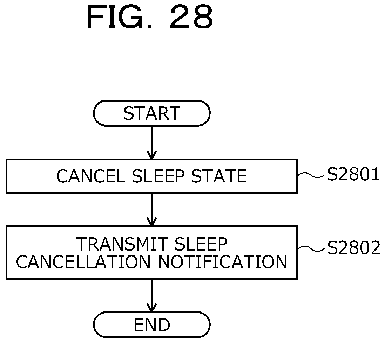

An example of a procedure of a cancellation process executed by the execution apparatus 202 will be described next by using FIG. 28. The cancellation process is implemented by, for example, the CPU 701 illustrated in FIG. 7, a storage area such as the memory 702 or the recording medium 705 illustrated in FIG. 7, and the network I/F 703 illustrated in FIG. 7.

FIG. 28 is a flowchart illustrating an example of the procedure of the cancellation process. In FIG. 28, the execution apparatus 202 cancels the sleep state in response to updating, in the sleep state, the processing result based on the sensing data of the states of any of the objects implemented therein (step S2801).

Next, the execution apparatus 202 transmits the sleep cancellation notification that indicates that the sleep state has been cancelled, to the accepting-side apparatus 201 (step S2802). The execution apparatus 202 then ends the cancellation process.

As described above, the information processing apparatus 100 may accept a query that includes information for identifying a target period and a condition for extracting a processing result. With reference to the correspondence information, based on the accepted query, the information processing apparatus 100 may select a processing unit that has a processing result updated in the target period from among the processing units included in the stream processing infrastructure 220. The information processing apparatus 100 may transmit, to the selected processing unit, a request to execute a predetermined process on the processing result that was updated in the target period and satisfies the condition. In this manner, the information processing apparatus 100 may limit the processing unit to which the request to execute the predetermined process on the processing result that was updated in the target period and satisfies the condition is transmitted, and thus may reduce the load on the stream processing infrastructure 220.

In a case of receiving a first notification from a first processing unit, the information processing apparatus 100 may update, based on the received first notification, information that indicates a timing and is associated with information that indicates the first processing unit in correspondence information. With reference to the correspondence information, based on the accepted query, the information processing apparatus 100 may select a processing unit that is not in a sleep state from among the processing units included in the stream processing infrastructure 220. In this manner, the information processing apparatus 100 may appropriately select a processing unit to which it is preferable to transmit the request to execute the predetermined process on the processing result that was updated in the target period and satisfies the condition.

With reference to the correspondence information, based on the accepted query, the information processing apparatus 100 may select a processing unit that is in the sleep state and has the processing result updated in the target period from among the processing units included in the stream processing infrastructure 220. In this manner, the information processing apparatus 100 may appropriately select a processing unit to which it is preferable to transmit the request to execute the predetermined process on the processing result that was updated in the target period and satisfies the condition.

The information processing apparatus 100 may update the correspondence information based on a received second notification. In this manner, the information processing apparatus 100 may update the correspondence information to the latest state. The information processing apparatus 100 may then appropriately select a processing unit to which the request to execute the predetermined process on the processing result that was updated in the target period and satisfies the condition is transmitted.

The information processing apparatus 100 may accept designation of a plurality of processing units included in the stream processing infrastructure 220. The information processing apparatus 100 may select a processing unit that has a processing result updated in the target period from among the plurality of processing units for which the designation has been accepted. In this manner, the information processing apparatus 100 may dynamically change a range for selecting the processing unit to which the request to execute the predetermined process on the processing result that has been updated in the target period and satisfies the condition is to be transmitted.

The information processing apparatus 100 may select a processing unit that has the processing result that was updated in the target period and has a designated attribute from among the processing units included in the stream processing infrastructure 220. In this manner, the information processing apparatus 100 may further limit the processing unit to which the request to execute the predetermined process on the processing result that was updated in the target period and satisfies the condition is transmitted, and thus may reduce the load on the stream processing infrastructure 220.

The information processing apparatus 100 may operate in the stream processing infrastructure 220. In this manner, the information processing apparatus 100 may transmit, to the processing unit, the request to execute the predetermined process on the processing result that was updated in the target period and satisfies the condition.

Preferably, the number of information processing apparatuses 100 included in the stream processing system 200 is less than the number of processing units included in the stream processing system 200. In this manner, the stream processing system 200 may easily reduce the load on the stream processing infrastructure 220.

The information processing method described in the present embodiment may be implemented by executing a program prepared in advance by a computer, such as a PC or a workstation. The information processing program described in the present embodiment is recorded on a computer-readable recording medium. The information processing program is read from the recording medium by the computer and is executed by the computer. The recording medium is a hard disk, a flexible disk, a compact disc (CD)-ROM, a magneto-optical disk (MO), a digital versatile disc (DVD), or the like. The information processing program described in the present embodiment may be distributed via a network, such as the Internet.

In relation to the embodiment described above, appendices below are further disclosed.

## Claims

1. An information processing method by performing a computer, the information processing method comprising:
accepting a query including first information for specifying a target period and a condition for extracting a processing result;
selecting, based on the query, a processing unit that has a processing result updated in the target period from among a plurality of the processing units included in the stream processing infrastructure by referring to correspondence information representing, in association with each other, second information indicating each of the plurality of the processing units and third information indicating a timing of a last update of a processing result by the processing unit; and
transmitting, to the selected processing unit, a request to execute a predetermined process on the processing result that has updated in the target period and satisfies the condition.

2. The information processing method according to claim 1, further comprising
updating, when a first notification is received from a first processing unit included in the plurality of processing unit, the third information in the correspondence information based on the first notification, the first notification indicating that the processing unit is in a state in which the processing unit has not updated the processing result for a certain period, in response to an elapse of the certain period without any update of the processing result of the processing unit,
wherein the second information and the third information include information that indicates whether or not the processing unit is in the state, and
the selecting includes selecting, based on the accepted query, the processing unit that is not in the state from among the processing units by referring to the correspondence information, based on the accepted query, is selected from among the processing units included in the stream processing infrastructure.

3. The information processing method according to claim 2, wherein
the first notification indicates a time point of the last update of the processing result of the processing unit by the processing unit,
the third information includes information that indicates a time point of the last update of the processing result of the processing unit by the processing unit when the processing unit is in the state, and
the selecting including selecting, based on the query, the processing unit that is in the state and has a processing result updated in the target period from among the processing units included in the stream processing infrastructure by referring to the correspondence information.

4. The information processing method according to claim 2 or 3, wherein
each of the plurality of processing units includes a function of transmitting, to the computer, a second notification that indicates that the processing unit is no longer in the state in a case where the processing result of the processing unit is updated by the processing unit after the transmission of the first notification, and
the updating includes updating the correspondence information based on a second notification that is received form any of the plurality of processing units, the second notification indicating that the processing unit is no longer in the state when the processing result of the processing unit is updated by the processing unit after the first notification is transmitted.

5. The information processing method according to any one of claims 1 to 4, further comprising:
accepting designation of the plurality of processing units, wherein
selecting includes selecting the processing unit that has a processing result updated in the target period from among the plurality of processing units for which the designation is accepted.

6. The information processing method according to any one of claims 1 to 5, wherein
the condition designates an attribute of the processing result,
the correspondence information represents, in association with one another, the second information, the third information, and for the information indicating an attribute of the processing result, and
the selecting includes selecting the processing unit that has a processing result that has updated in the target period and has the designated attribute is selected from among the processing units.

7. The information processing method according to any one of claims 1 to 6, wherein the computer is included in the stream processing infrastructure.

8. An information processing program in which a computer performs processing of:
accepting a query including first information for specifying a target period and a condition for extracting a processing result;
selecting, based on the query, a processing unit that has a processing result updated in the target period from among a plurality of the processing units included in the stream processing infrastructure by referring to correspondence information representing, in association with each other, second information indicating each of the plurality of the processing units and third information indicating a timing of a last update of a processing result by the processing unit; and
transmitting, to the selected processing unit, a request to execute a predetermined process on the processing result that has updated in the target period and satisfies the condition.

9. A stream processing system comprising:
a plurality of information processing apparatus configured to manage a plurality of processing units; wherein
each of the plurality of information processing apparatus is further configured to:
accept a query including first information for specifying a target period and a condition for extracting a processing result;
select, based on the query, a processing unit that has a processing result updated in the target period from among the plurality of the processing units by referring to correspondence information representing, in association with each other, second information indicating each of the plurality of the processing units and third information indicating a timing of a last update of a processing result by the processing unit; and
transmit, to the selected processing unit, a request to execute a predetermined process on the processing result that has updated in the target period and satisfies the condition.

10. The stream processing system according to claim 9, wherein
a number of the plurality of information processing apparatus are less than a number of the plurality of processing units.
